(19) Europäisches Patentamt / European Patent Office / Office européen des brevets

(11) **EP 3 615 902 B1**

(12) **FASCICULE DE BREVET EUROPEEN**

(45) Date de publication et mention de la délivrance du brevet:
**14.04.2021 Bulletin 2021/15**

(21) Numéro de dépôt: **18722433.2**

(22) Date de dépôt: **26.04.2018**

(51) Int Cl.:
*G01J 9/02* $^{(2006.01)}$ *G01J 11/00* $^{(2006.01)}$
*G01J 1/42* $^{(2006.01)}$

(86) Numéro de dépôt international:
**PCT/EP2018/060679**

(87) Numéro de publication internationale:
**WO 2018/197599 (01.11.2018 Gazette 2018/44)**

(54) **PROCEDE DE CARACTERISATION SPATIO-SPECTRALE D'UNE SOURCE LASER IMPULSIONNELLE POLYCHROMATIQUE**

VERFAHREN ZUR RÄUMLICH-SPEKTRALEN CHARAKTERISIERUNG EINER POLYCHROMATISCHEN GEPULSTEN LASERQUELLE

METHOD FOR SPATIO-SPECTRAL CHARACTERIZATION OF A POLYCHROMATIC PULSED LASER SOURCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2017 FR 1753672**

(43) Date de publication de la demande:
**04.03.2020 Bulletin 2020/10**

(73) Titulaire: **Commissariat à l'Énergie Atomique et aux Énergies Alternatives
75015 Paris (FR)**

(72) Inventeurs:
• **QUERE, Fabien**
**78140 Vélizy-Villacoublay (FR)**
• **BOROT, Antonin**
**94230 Cachan (FR)**

(74) Mandataire: **Cabinet Camus Lebkiri
25 rue de Maubeuge
75009 Paris (FR)**

(56) Documents cités:
**FR-A1- 3 022 346**

• **G. PARIENTE ET AL: "Space-time characterization of ultra-intense femtosecond laser beams", NATURE PHOTONICS, vol. 10, no. 8, 25 juillet 2016 (2016-07-25), pages 547-553, XP055450174, UK ISSN: 1749-4885, DOI: 10.1038/nphoton.2016.140**
• **KAHALY S ET AL: "Investigation of amplitude spatio-temporal couplings at the focus of a 100 TW-25 fs laser", APPLIED PHYSICS LETTERS, A I P PUBLISHING LLC, US, vol. 104, no. 5, 3 février 2014 (2014-02-03), XP012181509, ISSN: 0003-6951, DOI: 10.1063/1.4863828 [extrait le 1901-01-01]**
• **PAMELA BOWLAN ET AL.: "Measuring the complete spatio-temporal field of focused ultrashort laser pulses for multi-photon microscopy", SPIE, PO BOX 10 BELLINGHAM WA 98227-0010 USA, 12 juin 2007 (2007-06-12), XP040241225,**

EP 3 615 902 B1

**Description**

**DOMAINE TECHNIQUE DE L'INVENTION**

Le domaine technique de l'invention est celui de la métrologie optique. La présente invention concerne un procédé de caractérisation spatio-spectrale d'une source laser impulsionnelle polychromatique. L'expression « caractérisation spatio-spectrale » est synonyme de « caractérisation spatio-fréquentielle ».

**ARRIERE-PLAN TECHNOLOGIQUE DE L'INVENTION**

Une source laser impulsionnelle polychromatique peut présenter des couplages entre ses propriétés spatiales d'une part, et ses propriétés temporelles ou spectrales d'autre part. Autrement dit, les propriétés temporelles ou spectrales du champ électromagnétique d'une source laser impulsionnelle polychromatique peuvent varier spatialement, et vice versa. Une source laser polychromatique émet une lumière laser composée de plusieurs fréquences.

On recherche des méthodes de mesure pour déterminer la structure spatio-temporelle, ou de manière équivalente la structure spatio-spectrale, d'impulsions lasers polychromatiques.

Parmi les techniques existantes de mesure de ces couplages, la technique TERMITES (de l'anglais « Total E-field Reconstruction from a Michelson Interferometer TEmporal Scan ») décrite dans le document FR3022346 A1 consiste à comparer chaque point spatial du champ d'un faisceau laser collimaté, c'est-à-dire non-focalisé, à caractériser, avec un champ de référence de grande taille généré à partir d'une partie, considérée comme un point source, du champ à caractériser. Cette comparaison est réalisée par spectrométrie à transformée de Fourier résolue spatialement. Cette technique présente notamment les avantages suivants :

- elle est mise en œuvre au moyen d'un montage relativement simple donc peu coûteux ;
- elle permet une reconstruction du faisceau selon trois dimensions : deux dimensions spatiales x, y et une dimension temporelle ;
- elle offre un excellent échantillonnage spatial et spectral ;
- elle est utilisable pour caractériser des grands faisceaux lasers, c'est-à-dire par exemple des faisceaux lasers dont le diamètre est de l'ordre de 10 cm environ ;
- enfin, elle est applicable quelle que soit la durée d'impulsion laser.

Toutefois, la technique TERMITES présente également l'inconvénient d'être mise en œuvre au moyen d'un montage qui est d'autant plus encombrant que le diamètre du faisceau à caractériser est grand. L'encombrement du montage devient particulièrement problématique pour des faisceaux de diamètre supérieur à 10 cm. Afin de réduire la taille de tels faisceaux et pouvoir ainsi continuer à utiliser la technique TERMITES, l'emploi d'un télescope peut être envisagé. Il s'agit cependant d'un dispositif coûteux, relativement difficile d'emploi en raison d'un alignement critique et qui demeure encombrant.

D'autres techniques de caractérisation spatio-spectrale d'une source laser impulsionnelle polychromatique sont divulguées dans G. PARIENTE ET AL: "Space-time characterization of ultra-intense femtosecond laser beams",NATURE PHOTONICS, vol. 10, no. 8, 25 juillet 2016, pages 547-553;

KAHALY S ET AL: "Investigation of amplitude spatio-temporal couplings at the focus of a 100 TW-25 fs laser",APPLIED PHYSICS LETTERS, A I P PUBLISHING LLC, US, vol. 104, no. 5, 3 février 2014 et

BOWLAN P ET AL. "Measuring the Complete Spatio-temporal Field of Focused Ultrashort Laser Pulses for Multi-photon Microscopy", Photonic Materials, Devices, and Applications II, edited by Ali Serpengüzel,Gonçal Badenes, Giancarlo Righini, Proc. of SPIE Vol. 6593, 659308, (2007).

**RESUME DE L'INVENTION**

Un objectif de la présente invention est de permettre une caractérisation spatio-spectrale d'une source laser impulsionnelle polychromatique émettant un faisceau de diamètre arbitrairement grand et des impulsions de durée arbitrairement brève, au moyen d'un dispositif peu encombrant et peu coûteux.

Un aspect de l'invention concerne un procédé de caractérisation spatio-spectrale d'une source laser impulsionnelle polychromatique, dans un dispositif comportant :

- une source laser impulsionnelle polychromatique émettant un faisceau comportant une pluralité d'impulsions lasers de largeur spectrale $A\Omega$ dans une direction de propagation z ;
- une optique de focalisation focalisant le faisceau dans un plan focal en $z_0$ ;
- un système imageur pour imager un premier plan du faisceau en z1 à proximité du plan focal $z_0$ et un deuxième

plan du faisceau en z1 + dz, le système imageur comportant au moins une caméra ;

- un interféromètre à division d'amplitude agencé entre l'optique de focalisation et la caméra et ayant des premier et deuxième bras ;

le procédé comportant, pour chacun des premier et deuxième plans du faisceau, les étapes suivantes :

- imager le plan du faisceau au moyen du système imageur ;
- créer des première et deuxième répliques du faisceau au moyen des premier et deuxième bras de l'interféromètre à division d'amplitude ;
- recombiner les première et deuxième répliques du faisceau sur la caméra du système imageur, de manière à obtenir une image en deux dimensions spatiales ayant des motifs d'interférences spatiales ;
- mesurer cette image en fonction d'un délai $\tau$ entre les première et deuxième répliques, le délai $\tau$ balayant un intervalle de temps $\Delta t$ avec un pas dt, pour l'obtention d'un interférogramme temporel en chaque point spatial de l'image, l'ensemble des interférogrammes temporels formant un interférogramme spatio-temporel ;
- calculer la transformée de Fourier 1D de chaque interférogramme temporel ou la transformée de Fourier 3D de l'interférogramme spatio-temporel, ladite transformée de Fourier comportant un pic fréquentiel central et deux pics fréquentiels latéraux ;
- filtrer ladite transformée de Fourier de manière à ne conserver que l'un des deux pics fréquentiels latéraux ;

le procédé comportant ensuite, pour chaque fréquence de la source laser impulsionnelle polychromatique, une étape de reconstruction du profil spatial de phase résolu en fréquence à partir d'un premier profil spatial d'amplitude résolu en fréquence obtenu pour le premier plan du faisceau et d'un deuxième profil spatial d'amplitude résolu en fréquence obtenu pour le deuxième plan du faisceau.

Une transformée de Fourier permet de passer d'un espace « réel », également appelé espace « direct », à un espace « réciproque » ; une transformée de Fourier inverse permet de repasser de l'espace réciproque à l'espace réel. On entend par « transformée de Fourier 1D » une transformée de Fourier à une dimension temporelle. Une transformée de Fourier 1D permet de passer d'une dimension de temps t dans l'espace réel à une dimension de fréquence temporelle w dans l'espace réciproque. On entend par « transformée de Fourier 2D » une transformée de Fourier à deux dimensions spatiales. Une transformée de Fourier 2D permet de passer d'une première dimension spatiale x dans l'espace réel à une première dimension de fréquence spatiale $k_x$ dans l'espace réciproque, et d'une deuxième dimension spatiale y dans l'espace réel à une deuxième dimension de fréquence spatiale $k_y$ dans l'espace réciproque. On entend par « transformée de Fourier 3D » une transformée de Fourier à trois dimensions : une dimension temporelle et deux dimensions spatiales. Une transformée de Fourier 3D permet donc de passer :

- d'une dimension de temps t dans l'espace réel à une dimension de fréquence temporelle w dans l'espace réciproque ;
- d'une première dimension spatiale x dans l'espace réel à une première dimension de fréquence spatiale $k_x$ dans l'espace réciproque, et
- d'une deuxième dimension spatiale y dans l'espace réel à une deuxième dimension de fréquence spatiale $k_y$ dans l'espace réciproque.

Le procédé de caractérisation spatio-spectrale d'une source laser impulsionnelle polychromatique selon un aspect de l'invention est mis en œuvre au moyen d'un dispositif peu coûteux, qui comporte simplement, outre la source laser impulsionnelle polychromatique à caractériser, une optique de focalisation, un système imageur comprenant une caméra et un interféromètre à division d'amplitude. En focalisant le faisceau, on s'affranchit de sa taille. On peut ainsi travailler avec des faisceaux de toutes tailles, y compris des faisceaux de grande taille, présentant par exemple un diamètre supérieure à 10 cm, sans avoir à modifier le dispositif et donc sans augmenter son encombrement. Le procédé selon un aspect de l'invention est particulièrement avantageux pour la caractérisation de lasers impulsionnels de haute puissance et de grand diamètre qui sont utilisés au foyer, puisqu'il permet de les caractériser à l'endroit où ils sont utilisés. Comme ces lasers sont utilisés au foyer, leur montage optique comporte en pratique déjà une optique de focalisation, et par ailleurs, un système d'imagerie est généralement utilisé pour déterminer la qualité de la focalisation du faisceau. Ainsi, le procédé selon un aspect de l'invention est avantageusement mis en œuvre de manière économique, au moyen d'un montage optique dont la plupart des composants optiques sont déjà présents. Lorsque l'optique de focalisation et le système d'imagerie sont déjà présents, il suffit en effet d'ajouter un interféromètre à division d'amplitude pour pouvoir mettre en œuvre le procédé selon un aspect de l'invention.

Grâce à l'invention, on image le premier plan du faisceau puis on crée des première et deuxième répliques du premier plan du faisceau, que l'on recombine sur la caméra du système imageur de manière à obtenir une image en deux dimensions spatiales ayant des motifs d'interférences spatiales. On mesure ensuite cette image en fonction d'un délai $\tau$ entre les première et deuxième répliques, le délai $\tau$ balayant un intervalle de temps $\Delta t$ avec un pas dt, pour l'obtention d'un interférogramme temporel en chaque point spatial de l'image. Un interférogramme temporel est résolu en une dimension temporelle t. La pluralité d'images obtenue forme un interférogramme spatio-temporel. Un interférogramme spatio-temporel peut être vu comme l'ensemble des interférogrammes temporels de chaque point spatial de l'image. Un interférogramme spatio-temporel est résolu en une dimension temporelle t, une première dimension spatiale x et une deuxième dimension spatiale y. On calcule alors la transformée de Fourier 1D de chaque interférogramme temporel, ou la transformée de Fourier 3D de l'interférogramme spatio-temporel. En calculant la transformée de Fourier 1D de chaque interférogramme temporel, on passe de l'espace réel (t, x, y) à l'espace réciproque ($\omega$, x, y). En calculant la transformée de Fourier 3D de l'interférogramme spatio-temporel, on passe de l'espace réel (t, x, y) à l'espace réciproque ($\omega$, $k_x$, $k_y$). Dans un cas comme dans l'autre, ladite transformée de Fourier comporte, selon la dimension de la fréquence temporelle $\omega$, un pic fréquentiel central et deux pics fréquentiels latéraux. Puis on filtre ladite transformée de Fourier de manière à ne conserver que l'un des deux pics fréquentiels latéraux. Dans le cas où on a calculé la transformée de Fourier 1D de chaque interférogramme temporel, on se trouve alors dans l'espace ($\omega$, x, y). Dans le cas où on a calculé la transformée de Fourier 3D de l'interférogramme spatio-temporel vers l'espace l'espace ($\omega$, $k_x$, $k_y$), on réalise une transformée de Fourier 2D inverse, afin de se trouver également dans l'espace ($\omega$, x, y) au terme du calcul. Dans les deux cas, on obtient finalement l'intensité spectrale du faisceau, en chaque point spatial du premier plan. L'amplitude spectrale du faisceau en chaque point spatial du premier plan est alors obtenue en prenant la racine de l'intensité spectrale du faisceau en chaque point spatial du premier plan. Les étapes précédentes sont également réalisées pour un deuxième plan du faisceau, de manière à obtenir le spectre du faisceau, ou autrement dit l'intensité spectrale du faisceau, en chaque point spatial du deuxième plan. De même, l'amplitude spectrale du faisceau en chaque point spatial du deuxième plan est obtenue en prenant la racine de l'intensité spectrale du faisceau en chaque point spatial du deuxième plan. On change alors de point de vue et on ne considère plus qu'on a obtenu l'amplitude spectrale du faisceau en chaque point spatial des premier et deuxième plans, mais plutôt le profil spatial d'amplitude pour chaque fréquence des premier et deuxième plans. On réalise alors une étape de reconstruction du profil spatial de phase résolu en fréquence à partir du profil spatial d'amplitude résolu en fréquence du premier plan et du profil spatial d'amplitude résolu en fréquence du deuxième plan.

Outre les caractéristiques qui viennent d'être évoquées dans le paragraphe précédent, le procédé de caractérisation spatio-spectrale selon un aspect de l'invention peut présenter une ou plusieurs caractéristiques complémentaires parmi les suivantes, considérées individuellement ou selon toutes les combinaisons techniquement possibles :

- Selon un premier mode de réalisation, les premier et deuxième bras de l'interféromètre à division d'amplitude présentent un même indice de réfraction et une longueur de chemin optique différente.

- Selon le premier mode de réalisation de l'invention, l'interféromètre à division d'amplitude est préférentiellement configuré en coin d'air de manière que ses premier et deuxième bras présentent un angle entre eux et que les motifs d'interférences spatiales obtenus lors de la recombinaison des première et deuxième répliques du faisceau sur la caméra du système imageur sont des franges d'interférences spatiales.

- L'interféromètre à division d'amplitude étant configuré en coin d'air, le procédé de caractérisation spatio-spectrale comporte avantageusement, pour chaque image ayant des franges d'interférences spatiales, les étapes suivantes :

    • calculer la transformée de Fourier spatiale à deux dimensions de ladite image, de façon à obtenir une image réciproque comportant un pic fréquentiel central et deux pics fréquentiels latéraux ;
    • modifier l'image réciproque grâce aux propriétés du pic fréquentiel central ;
    • calculer la transformée de Fourier spatiale inverse de l'image réciproque modifiée de façon à revenir dans l'espace initial.

On réalise ainsi avantageusement un procédé de correction numérique des fluctuations de pointé du faisceau laser pour chaque image de la pluralité de premières images du premier plan et de la pluralité de deuxièmes images du deuxième plan.

- L'interféromètre à division d'amplitude étant configuré en coin d'air, l'angle entre les premier et deuxième bras de l'interféromètre à division d'amplitude est choisi de manière que chaque frange d'interférence spatiale s'étend sur au moins deux pixels de la caméra.

- L'interféromètre à division d'amplitude étant configuré en coin d'air, le pas dt est avantageusement choisi tel que :

$$dt \leq \frac{2\pi}{\Delta\Omega}$$

et on calcule avantageusement la transformée de Fourier 3D de l'interférogramme spatio-temporel. En effet, lorsque l'interféromètre à division d'amplitude est configuré en coin d'air et que la transformée de Fourier 3D de l'interférogramme spatio-temporel est calculée, il est avantageusement possible d'utiliser une fréquence d'échantillonnage inférieure à la fréquence d'échantillonnage minimum requise selon le critère de Nyquist dans une configuration en lame d'air, sans introduire de recouvrement spectral pour autant.

- Selon une alternative du premier mode de réalisation de l'invention, l'interféromètre à division d'amplitude est un interféromètre de type Mach-Zehnder.

- Selon un deuxième mode de réalisation, les premier et deuxième bras de l'interféromètre à division d'amplitude présentent une même longueur de chemin optique et un indice de réfraction différent.

- Selon le deuxième mode de réalisation, dans l'interféromètre à division d'amplitude, une fonction d'optique séparatrice est assurée par un matériau biréfringent et une fonction d'optique de recombinaison est assurée par un polariseur.

- Selon le deuxième mode de réalisation, l'interféromètre à division d'amplitude comporte un premier assemblage d'un premier prisme et d'un deuxième prisme accolés, réalisés dans un même type de matériau biréfringent uniaxe et ayant leurs axes optiques perpendiculaires, le premier assemblage étant placé sur une platine afin de contrôler un délai entre les premier et deuxième bras de l'interféromètre à division d'amplitude.

- Selon le deuxième mode de réalisation, l'interféromètre à division d'amplitude comporte un deuxième assemblage d'un troisième prisme et d'un quatrième prisme accolés, réalisés dans le même type de matériau biréfringent uniaxe et avec le même angle que les premier et deuxième prismes ; l'axe optique du troisième prisme étant identique à l'axe optique du premier prisme et l'axe optique du quatrième prisme étant identique à l'axe optique du deuxième prisme ; le premier assemblage ayant un premier plan d'interface entre les premier et deuxième prismes accolés et le deuxième assemblage ayant un deuxième plan d'interface entre les troisième et quatrième prismes accolés, le deuxième assemblage étant agencé par rapport au premier assemblage de manière que les premier et deuxième plans d'interface ne sont pas parallèles entre eux et présentent au contraire des pentes inversées ; et le faisceau parcourant un trajet aller à travers les premier et deuxième assemblages et un trajet retour à travers les deuxième et premier assemblages.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1a montre une représentation schématique d'un premier dispositif pour la mise en œuvre d'un procédé de caractérisation spatio-spectrale d'une source laser impulsionnelle polychromatique selon un aspect de l'invention.
- La figure 1b montre une représentation schématique d'un deuxième dispositif pour la mise en œuvre d'un procédé de caractérisation spatio-spectrale d'une source laser impulsionnelle polychromatique selon un aspect de l'invention.
- La figure 1c montre une représentation schématique d'un troisième dispositif pour la mise en œuvre d'un procédé de caractérisation spatio-spectrale d'une source laser impulsionnelle polychromatique selon un aspect de l'invention.
- La figure 1d montre une représentation schématique d'un quatrième dispositif pour la mise en œuvre d'un procédé de caractérisation spatio-spectrale d'une source laser impulsionnelle polychromatique selon un aspect de l'invention.
- La figure 1e montre une représentation schématique d'un cinquième dispositif pour la mise en œuvre d'un procédé de caractérisation spatio-spectrale d'une source laser impulsionnelle polychromatique selon un aspect de l'invention.
- La figure 2a montre un premier diagramme des étapes du procédé de caractérisation spatio-spectrale d'une source laser impulsionnelle polychromatique selon un aspect de l'invention, au moyen du premier dispositif de la figure 1a, ou du deuxième dispositif de la figure 1b, ou du troisième dispositif de la figure 1c.
- La figure 2b montre un deuxième diagramme des étapes du procédé de caractérisation spatio-spectrale d'une source laser impulsionnelle polychromatique selon un aspect de l'invention, au moyen du premier dispositif de la figure 1a, ou du deuxième dispositif de la figure 1b, ou du troisième dispositif de la figure 1c.

- La figure 3a montre une pluralité d'images d'un plan du faisceau de la source laser impulsionnelle polychromatique, obtenues pour différents délais $\tau$ entre des première et deuxième répliques du faisceau.
- La figure 3b montre un interférogramme temporel obtenu en un point spatial r = (x, y) du plan du faisceau imagé avec la pluralité d'images de la figure 3a.
- La figure 3c montre une transformée de Fourier 1D obtenue pour l'interférogramme temporel de la figure 3a.
- La figure 4a montre une représentation en deux dimensions, selon une dimension temporelle $\tau$ et une première dimension spatiale x, d'un signal d'autocorrélation résolu selon la première dimension spatiale x et selon une deuxième dimension spatiale y, obtenu en sortie du premier dispositif de la figure 1a.
- La figure 4b montre la transformée de Fourier 1D du signal d'autocorrélation de la figure 4a, pour une première fréquence d'échantillonnage dudit signal d'autocorrélation.
- La figure 4c montre la transformée de Fourier 1D du signal d'autocorrélation de la figure 4a, pour une deuxième fréquence d'échantillonnage dudit signal d'autocorrélation, inférieure à la première fréquence d'échantillonnage de la figure 4b.
- La figure 5a montre une représentation en deux dimensions, selon une dimension temporelle $\tau$ et une première dimension spatiale x, d'un signal d'autocorrélation résolu selon la première dimension spatiale x et selon une deuxième dimension spatiale y, obtenu en sortie du deuxième dispositif de la figure 1b ou en sortie du troisième dispositif de la figure 1c.
- La figure 5b montre une représentation en deux dimensions, selon une dimension de fréquence temporelle w et une dimension de fréquence spatiale $k_x$, de la transformée de Fourier 3D du signal d'autocorrélation de la figure 5a, pour une première fréquence d'échantillonnage dudit signal d'autocorrélation.
- La figure 5c montre une représentation en deux dimensions, selon une dimension de fréquence temporelle w et une dimension de fréquence spatiale $k_x$, de la transformée de Fourier 3Ddu signal d'autocorrélation de la figure 5a, pour une deuxième fréquence d'échantillonnage dudit signal d'autocorrélation, inférieure à la première fréquence d'échantillonnage de la figure 5b.
- La figure 6a montre un ordinogramme des différentes étapes d'un premier exemple d'algorithme de reconstruction de phase spatiale, à partir de deux profils spatiaux d'amplitude distincts.
- La figure 6b montre un ordinogramme des différentes étapes d'un deuxième exemple d'algorithme de reconstruction de phase spatiale, à partir de trois profils spatiaux d'amplitude distincts.

## DESCRIPTION DETAILLEE D'AU MOINS UN MODE DE REALISATION DE L'INVENTION

Sauf précision contraire, un même élément apparaissant sur des figures différentes présente une référence unique.

On considère une source laser impulsionnelle polychromatique émettant un faisceau lumineux se propageant dans une direction de propagation z. On définit un repère orthonormé (O, x, y, z). Le faisceau lumineux comporte une pluralité d'impulsions lasers.

Les impulsions considérées sont des impulsions picoseconde, c'est-à-dire de durée comprise entre 0,1 et 100 ps environ, ou femtoseconde, c'est-à-dire de durée inférieure ou égale à 100 fs=0,1 ps. Les durées s'entendent à mi-hauteur du profil d'intensité. Ces impulsions présentent une largeur spectrale relativement large, c'est-à-dire typiquement de l'ordre de quelques dizaines de nanomètres, voire de l'ordre de quelques centaines de nanomètres. Par ailleurs, les impulsions considérées présentent un diamètre, mesuré dans une direction transverse à la direction de propagation de la lumière, allant typiquement de quelques mm à quelques dizaines cm selon la puissance de la source, qui peut atteindre plusieurs Terawatt ou même PetaWatt.

On considère un faisceau lumineux linéairement polarisé. D'un point de vue mathématique, le faisceau lumineux est complètement décrit par la composante E(x, y, z = $z_0$, t) de son champ électrique le long de la direction de polarisation, en un point z = $z_0$ donné le long de la direction de propagation z. En effet, une fois le champ électrique connu en amplitude et en phase dans un plan (x, y, $z_0$) donné en fonction du temps t, on peut calculer ce champ électrique dans n'importe quel autre plan (x, y, z) en utilisant un modèle de propagation connu, tel que la décomposition en ondes planes. Dans la suite, on note E(x, y, t) le champ électrique dans le plan z = $z_0$ correspondant au foyer du faisceau.

Les impulsions étant très brèves, il est intéressant de travailler dans l'espace de Fourier correspondant à la variable temps t, c'est-à-dire étudier la transformée de Fourier $\hat{E}(x, y, \omega)$ du champ électrique E(x, y, t) :

$$\hat{E}(x,y,\omega) = \left|\hat{E}(x,y,\omega)\right|e^{i\varphi(x,y,\omega)} = A(x,y,\omega)e^{i\varphi(x,y,\omega)} = \int_{-\infty}^{+\infty} E(x,y,t)e^{-i\omega t}\,dt$$

La mesure de l'intensité spectrale $|\hat{E}(x,y,\omega)|^2$ est en principe simplement obtenue au moyen d'un spectromètre optique. Elle peut cependant se révéler particulièrement difficile à réaliser au foyer du faisceau en cas de fluctuations de pointé du faisceau, qui se traduisent par des variations de position de la tache focale d'un tir laser à l'autre. Les systèmes lasers de haute puissance sont généralement affectés par de telles fluctuations de pointé, avec des variations de position de la tache focale dont l'amplitude est typiquement comparable à la taille de la tache focale. En cas de fluctuations de pointé, il est donc particulièrement difficile de réaliser, au moyen d'une technique nécessitant plusieurs tirs lasers, une mesure d'intensité spectrale résolue spatialement au sein de la tache focale.

La principale difficulté concerne toutefois la mesure de la phase spectrale $\varphi(x, y, \omega)$. Une fois l'intensité spectrale et la phase spectrale connues, le champ électrique E(x, y, t) peut être reconstruit en trois dimensions par une transformée de Fourier sur la variable fréquence $\omega$.

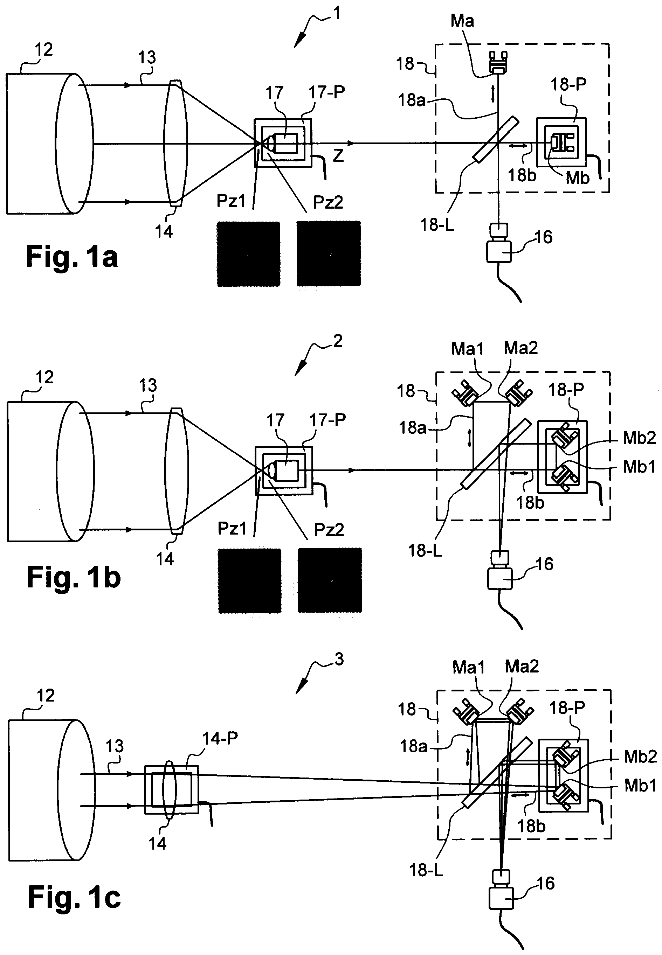

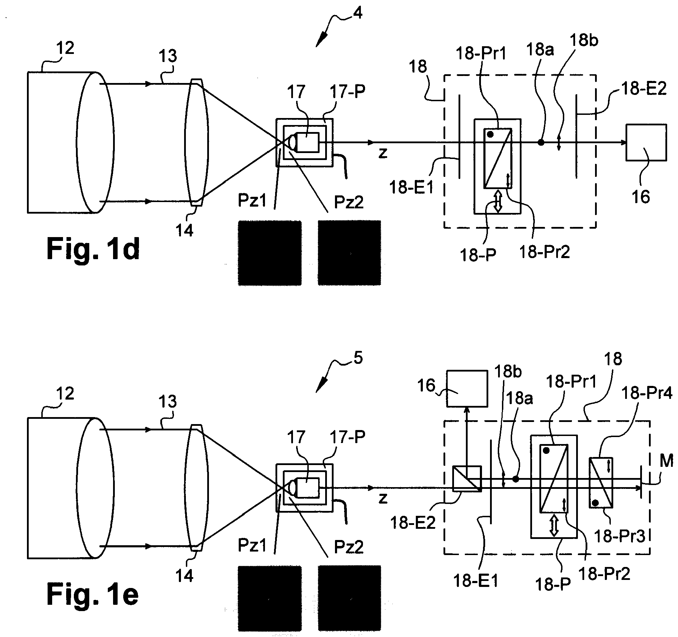

La figure 1a montre une représentation schématique d'un premier dispositif 1 pour la mise en œuvre d'un procédé 100 de caractérisation spatio-spectrale d'une source laser impulsionnelle polychromatique. La figure 1b montre une représentation schématique d'un deuxième dispositif 2 pour la mise en œuvre dudit procédé 100. La figure 1c montre une représentation schématique d'un troisième dispositif 3 pour la mise en œuvre dudit procédé 100. La figure 1d montre une représentation schématique d'un quatrième dispositif 4 pour la mise en œuvre dudit procédé 100. La figure 1e montre une représentation schématique d'un cinquième dispositif 5 pour la mise en œuvre dudit procédé 100.

Chacun des premier, deuxième, troisième, quatrième et cinquième dispositifs 1, 2, 3, 4, 5 comporte :

- une source laser impulsionnelle polychromatique 12,
- une optique de focalisation 14,
- un système imageur comportant au moins une caméra 16, et
- un interféromètre à division d'amplitude 18.

La source laser impulsionnelle polychromatique 12 émet un faisceau 13 comportant une pluralité d'impulsions lasers de largeur spectrale $\Delta\Omega$ dans une direction de propagation z. La source laser impulsionnelle polychromatique 12 peut par exemple être une source laser CPA (de l'anglais « chirped pulse amplification ») Titane-Saphire ou un amplificateur paramétrique. Ces exemples illustratifs ne sont naturellement pas limitatifs.

Le cas échéant, le faisceau 13 est typiquement atténué de manière que son intensité sur les optiques du système imageur soit suffisamment faible pour éviter tout effet de distorsion d'origine thermique ou non-linéaire. En pratique, on recherche une intensité au foyer inférieure à $10^{12}$ W/cm², préférentiellement inférieure à $10^{11}$ W/cm², encore plus préférentiellement inférieure à $10^{10}$ W/cm². Une atténuation peut par exemple être réalisée au moyen de réflexions sur des lames en silice sans traitement, ou par transmission dans des optiques de densité optique adaptée.

L'optique de focalisation 14 focalise le faisceau 13 dans un plan focal. On définit le plan focal comme étant de coordonnées $z_0$ selon la direction de propagation z. La figure 1 représente par simplicité l'optique de focalisation 14 sous la forme d'une lentille, mais pour les impulsions considérées, qui sont de large bande spectrale et de forte puissance, l'optique de focalisation 14 est typiquement un miroir parabolique hors axe.

Le système imageur permet d'imager le faisceau 13 dans un premier plan Pz1 de coordonnées z1 dans la direction de propagation z. Le premier plan Pz1 est dans le plan focal $z_0$ ou à proximité du plan focal $z_0$, c'est-à-dire typiquement dans un intervalle [$z_0$ - 2$z_R$ ; $z_0$ + 2$z_R$], préférentiellement [$z_0$ - $z_R$ ; $z_0$ + $z_R$], encore plus préférentiellement [$z_0$ - $z_R$/2 ; $z_0$ + $z_R$/2], encore plus préférentiellement [$z_0$ - $z_R$/4 ; $z_0$ + $z_R$/4] avec $z_R$ la longueur de Rayleigh du faisceau 13 qui est définie par l'équation :

$$z_R = \frac{\pi \times w_0{}^2}{\lambda_L}$$

avec :

$$\lambda_L = \frac{2\pi c}{\omega_L}$$

où $\omega_L$ est la fréquence moyenne pondérée du faisceau 13, c'est-à-dire la moyenne des fréquences du faisceau 13, chaque fréquence étant pondérée par sa valeur d'intensité spectrale ; et $w_0$ est la demi-largeur, également appelée « rayon », du faisceau 13 au foyer.

Le système imageur permet également d'imager le faisceau 13 dans un deuxième plan Pz2 à une distance dz du premier plan Pz1 : le deuxième plan Pz2 est de coordonnées z2 = z1 + dz dans la direction de propagation z. La distance dz entre le premier plan Pz1 et le deuxième plan Pz2 est préférentiellement choisie de manière que la taille du profil d'intensité mesuré sur le capteur de la caméra soit environ deux à cinq fois plus grand dans le deuxième plan Pz2 que dans le premier plan Pz1. La distance dz entre le premier plan Pz1 et le deuxième plan Pz2 est préférentiellement comprise dans l'intervalle [$z_R$; $10z_R$], et par exemple égale à $2z_R$ ou $5z_R$. Si la distance dz entre le premier plan Pz1 et le deuxième plan Pz2 est supérieure à $10z_R$, le faisceau 13 risque d'avoir, dans le deuxième plan Pz2, des dimensions trop importantes pour pouvoir être facilement imagé. Si la distance dz entre le premier plan Pz1 et le deuxième plan Pz2 est inférieure à $z_R$, le profil d'amplitude du faisceau 13 risque de ne pas varier assez entre les premier et deuxième plans Pz1, Pz2 pour permettre une caractérisation de qualité. Le choix de la distance entre les différents plans est avantageusement réalisé en tenant compte des couplages attendus : on espacera d'autant plus les plans que les couplages sont supposés importants.

Le système imageur permet également d'imager le faisceau 13 dans un troisième plan Pz3, le premier plan Pz1 étant agencé entre le deuxième plan Pz2 et le troisième plan Pz3. Autrement dit, troisième plan Pz3 est préférentiellement de coordonnées z3 = z1 - dz'. De même que pour la distance dz entre le premier plan Pz1 et le deuxième plan Pz2, et pour les mêmes raisons, la distance dz' entre le premier plan Pz1 et le troisième plan Pz3 est préférentiellement choisie de manière que la taille du profil d'intensité mesuré sur le capteur de la caméra soit environ deux à cinq fois plus grand dans le troisième plan Pz3 que dans le premier plan Pz1. La distance dz' entre le premier plan Pz1 et le troisième plan Pz3 est préférentiellement comprise dans l'intervalle [$z_R$; $10z_R$], et par exemple égale à $2z_R$ ou $5z_R$.

En pratique, on détermine le plan focal $z_0$ à l'endroit où la taille du faisceau sur le capteur de la caméra 16 est la plus petite.

Si la tache focale est de faibles dimensions, c'est-à-dire avec un diamètre inférieur ou égal à 200 $\mu$m, le système imageur comporte préférentiellement un objectif de microscope 17 produisant une image agrandie de la tache focale sur la caméra 16 et dans ce cas, l'interféromètre à division d'amplitude 18 est agencé entre l'objectif de microscope 17 et la caméra 16. Les figures 1a et 1b illustrent une telle configuration : le premier dispositif 1 et le deuxième dispositif 2 comportent chacun un objectif de microscope 17 dans leur système imageur. Si la tache focale est de grande dimension, c'est-à-dire avec un diamètre supérieur à 200 $\mu$m, elle peut être directement imagée par la caméra 16 placée au foyer ou à proximité du foyer. Dans le cas où le système imageur ne comporte pas d'objectif de microscope, l'interféromètre à division d'amplitude 18 se trouve entre l'optique de focalisation 14 et le plan focal $z_0$. La figure 1c illustre une telle configuration : le système imageur du troisième dispositif 3 ne comporte pas d'objectif de microscope. La caméra 16 est typiquement une caméra à capteur numérique telle qu'une caméra avec un capteur CCD (de l'anglais « charge-coupled device ») ou une caméra avec un capteur CMOS (de l'anglais « complementary metal-oxide-semiconductor »).

Pour imager le faisceau 13 dans de bonnes conditions, on privilégie une haute dynamique pour la caméra 16 du système imageur et on cherche à :

- ne pas saturer les zones de haute intensité ;
- ne pas perdre les zones de basse intensité du fait d'un bruit trop élevé ;
- ne pas couper les bords du signal, notamment en utilisant une caméra 16 ayant un capteur suffisamment grand par rapport à l'étendue spatiale de chaque plan de mesure du faisceau 13.

Afin de pouvoir imager différents plans du faisceau dans le plan focal ou à proximité du plan focal, l'optique de focalisation 14 et/ou, le cas échéant, l'objectif de microscope 17 peuvent être précisément déplacés le long de la direction de propagation z, avec une précision de l'ordre de 1 à 10 $\mu$m typiquement, par exemple au moyen d'une platine piézoélectrique ou d'une platine mécanique motorisée avec un moteur pas à pas. Alternativement, différents plans du faisceau peuvent être imagés dans le plan focal ou à proximité du plan focal au moyen d'un miroir déformable agencé avant l'optique de focalisation 14.

D'une manière générale, le système imageur ne devrait pas introduire lui-même de couplages spatio-spectraux, ni de distorsions thermiques ou non-linéaires dans le faisceau 13.

L'interféromètre à division d'amplitude 18 comporte une optique séparatrice et de recombinaison, un premier bras optique 18a et un deuxième bras optique 18b. Le premier bras optique 18a permet d'obtenir une première réplique 13a du faisceau 13 tandis que le deuxième bras optique 18b permet d'obtenir une deuxième réplique 13b du faisceau 13. Dans l'interféromètre du premier dispositif 1, l'optique séparatrice et de recombinaison est référencée 18-L, le premier bras optique 18a comporte un unique miroir Ma et le deuxième bras optique 18b comporte un unique miroir Mb. Dans l'interféromètre du deuxième dispositif 2 et du troisième dispositif 3, l'optique séparatrice et de recombinaison est également référencée 18-L, le premier bras optique 18a comporte des premier et deuxième miroirs Ma1 et Ma2, et le deuxième bras optique 18b comporte des premier et deuxième miroirs Mb1 et Mb2.

Dans l'interféromètre des premier, deuxième et troisième dispositifs 1, 2, 3, les premier et deuxième bras optiques 18a, 18b peuvent être retardés l'un par rapport à l'autre tout en conservant leur alignement, en déplaçant précisément le ou les miroirs du deuxième bras optique 18b le long de la direction du faisceau incident grâce à une platine 18-P, qui est par exemple une platine piézoélectrique ou une platine mécanique motorisée avec un moteur pas à pas. Le ou les miroirs du deuxième bras optique 18b peuvent être déplacés le long de la direction du faisceau incident z avec une précision d'au moins $\lambda_{min}/10$, préférentiellement $\lambda_{min}/50$ encore plus préférentiellement $\lambda_{min}/100$, avec $\lambda_{min}$

la plus petite longueur d'onde du faisceau 13.

Un angle peut être introduit entre les premier et deuxième bras optiques 18a, 18b de l'interféromètre des deuxième et troisième dispositifs 2 et 3, tout en conservant une superposition spatiale des première et deuxième répliques 13a, 13b sur la caméra 16 du système imageur, au moyen des premier et deuxième miroirs Ma1, Ma2 du premier bras optique 18a et des premier et deuxième miroirs Mb1, Mb2 du deuxième bras optique 18b. L'angle entre les premier et deuxième bras optiques 18a, 18b de l'interféromètre des deuxième et troisième dispositifs 2 et 3 est préférentiellement introduit au moyen des premier et deuxième miroirs Ma1, Ma2 du premier bras optique 18a, tandis que les premier et deuxième miroirs Mb1, Mb2 du deuxième bras optique 18b sont utilisés pour assurer la superposition spatiale des première et deuxième répliques 13a, 13b sur la caméra 16 du système imageur. L'interféromètre à division d'amplitude 18 des figures 1a, 1b et 1c est préférentiellement un interféromètre de type Mach-Zehnder. Alternativement, l'interféromètre à division d'amplitude 18 des figures 1a, 1b et 1c pourrait être un interféromètre de type Michelson.

La figure 1a illustre en particulier un mode de réalisation de l'invention selon lequel l'interféromètre à division d'amplitude est configuré en lame d'air, de manière que ses premier et deuxième bras 18a, 18b ne présentent aucun angle entre eux et que les motifs d'interférences spatiales obtenus lors d'une recombinaison des première et deuxième répliques soient des anneaux d'interférences spatiales. Selon un mode de réalisation préféré de l'invention, illustré aux figures 1b et 1c, l'interféromètre à division d'amplitude 18 est toutefois configuré en coin d'air, de manière que ses premier et deuxième bras 18a, 18b présentent un angle entre eux et que les motifs d'interférences spatiales obtenus lors d'une recombinaison des première et deuxième répliques soient des franges d'interférences spatiales. L'angle entre les premier et deuxième bras 18a, 18b de l'interféromètre à division d'amplitude 18 est préférentiellement choisi de manière que chaque frange d'interférence spatiale s'étende sur au moins deux pixels de la caméra 16. Plus l'angle est grand, plus les franges d'interférence spatiale sont étroites.

Dans l'interféromètre du quatrième dispositif 4 et du cinquième dispositif 5, la fonction d'optique séparatrice est assurée par un matériau ou cristal biréfringent, c'est-à-dire dont les propriétés optiques sont anisotropes. Différentes composantes de polarisation d'un rayon lumineux se propageant dans un cristal biréfringent « voient » différents indices de réfraction et se propagent donc à différentes vitesses de phase et de groupe. En conséquence, ces différentes composantes de polarisation sont retardées entre elles en sortie du cristal.

Pour l'application de l'invention, il s'agit de former deux bras permettant d'obtenir deux répliques présentant un certain retard entre elles. Dans le cas des interféromètres des premier, deuxième et troisième dispositifs 1, 2 et 3, les deux bras présentent un même indice de réfraction mais une longueur de chemin optique différente. Dans le cas des interféromètres des quatrième et cinquième dispositifs 4 et 5, les deux bras présentent une même longueur de chemin optique mais un indice de réfraction différent.

On utilise par exemple un cristal uniaxial (quartz, alpha-BBO ou calcite par exemple), c'est-à-dire présentant un axe unique, dit « axe optique », régissant l'anisotropie optique, toutes les directions perpendiculaires ou à un angle donné de l'axe optique étant optiquement équivalentes. Autrement dit, la rotation d'un cristal uniaxial autour de l'axe optique ne modifie pas son comportement optique. Un cristal uniaxial présente deux indices de réfraction distincts principaux généralement appelés indices ordinaire $n_e$ et extraordinaire $n_o$. La lumière dont la polarisation est perpendiculaire à l'axe optique voit l'indice ordinaire $n_o$. La lumière dont la polarisation est dans la direction de l'axe optique voit l'indice extraordinaire $n_e$.

Afin de contrôler le retard ou délai entre les deux bras, on prévoit dans le quatrième dispositif 4 de la figure 1d un premier assemblage d'un premier prisme 18-Pr1 et d'un deuxième prisme 18-Pr2 accolés, placé sur la platine 18-P qui permet de translater le premier assemblage dans le plan de la feuille, suivant la direction représentée, perpendiculaire à la direction de propagation z. Dans cette configuration, on peut choisir le signe du délai entre les deux bras. Le délai nul correspond au passage du faisceau 13 au centre du premier assemblage, lorsque le faisceau 13 traverse exactement la même épaisseur de premier prisme 18-Pr1 et de deuxième prisme 18-Pr2. Selon l'angle des prismes et la précision de la platine 18-P, le délai entre les deux bras peut être contrôlé avec une très grande précision, jusqu'à quelques attosecondes. On entend ici par « prisme » une lame à faces non parallèles (généralement traduit par « wedge » en anglais pour l'homme de l'art). Les premier et deuxième prismes 18-Pr1, 18-Pr2 sont réalisés dans un même type de matériau biréfringent uniaxe et avec leurs axes optiques perpendiculaires. Dans l'exemple de la figure 1d, l'axe optique du premier prisme 18-Pr1 est normal au plan de la feuille tandis que l'axe optique du deuxième prisme 18-Pr2 est dans le plan de la feuille, perpendiculaire à la direction de propagation z.

Il s'agit alors que le faisceau 13 en entrée du premier assemblage présente une première composante de polarisation non nulle selon l'axe optique du premier prisme 18-Pr1 et une deuxième composante de polarisation non nulle selon l'axe optique du deuxième prisme 18-Pr2. Les première et deuxième composantes non nulles sont de préférence équilibrées entre elles. Selon les caractéristiques de polarisation du faisceau 13 en sortie de la source laser impulsionnelle 12 et l'orientation de l'axe optique de chacun des premier et deuxième prismes 18-Pr1, 18-Pr2, une première optique de polarisation 18-E1, par exemple un polariseur ou une lame à retard telle qu'une lame demi-onde ou une lame quart d'onde, pourra être agencée sur le chemin du faisceau 13 entre la source et le premier assemble, afin d'obtenir des première et deuxième composantes non nulles et préférentiellement équilibrées tout en optimisant le montage optique.

Avec le premier assemblage de la figure 1d, dans le cas où le faisceau 13 en sortie de la source laser impulsionnelle 12 présente une polarisation rectiligne, dans le plan de la feuille, perpendiculairement à la direction de propagation z - c'est-à-dire dans le cas où la polarisation du faisceau 13 est entièrement suivant l'axe optique du deuxième prisme 18-Pr2, et où la première composante de polarisation suivant l'axe optique du premier prisme 18-Pr1 est nulle : on prévoit la première optique de polarisation 18-E1 pour modifier la direction de polarisation de manière qu'elle soit toujours perpendiculaire à la direction de propagation z mais hors du plan de la feuille, afin qu'elle présente les première et deuxième composantes non nulles; la première optique de polarisation 18-E1 étant de préférence choisie et agencée pour faire tourner la direction de polarisation de 45° afin d'équilibrer les première et deuxième composantes.

On obtient en sortie du premier assemblage une première réplique 13a du faisceau 13, correspondant à la première composante de polarisation ; et une deuxième réplique 13b du faisceau 13, correspondant à la deuxième composante de polarisation. Ces première et deuxième répliques sont recombinées au moyen d'un polariseur 18-E2 qui sélectionne une seule direction de polarisation, de préférence la direction correspondant à la bissectrice des première et deuxième composantes de manière que 50% de l'énergie de chaque composante soit sélectionnée.

Dans le quatrième dispositif 4 de la figure 1d :

- la fonction d'optique de séparation est assurée par le premier assemblage de prismes, avec le cas échéant la première optique de polarisation 18-E1 optionnelle en entrée ; et
- la fonction d'optique de recombinaison est assurée par le polariseur 18-E2 en sortie du premier assemblage de prismes.

Un perfectionnement du quatrième dispositif 4 de la figure 1d est proposé avec le cinquième dispositif 5 de la figure 1e. Selon ce perfectionnement, on agence en série après le premier assemblage précédemment décrit du premier prisme 18-Pr1 et du deuxième prisme 18-Pr2 accolés, placé sur la platine 18-P, un deuxième assemblage d'un troisième prisme 18-Pr3 et d'un quatrième prisme 18-Pr4 accolés. Le premier assemblage est mobile grâce à la platine 18-P tandis que le deuxième assemblage est fixe. Les troisième et quatrième prismes 18-Pr3, 18-Pr4 sont réalisés dans le même type de matériau biréfringent uniaxe que les premier et deuxième prismes 18-Pr1, 18-Pr2 et avec le même angle que les premier et deuxième prismes 18-Pr1, 18-Pr2. L'axe optique du troisième prisme 18-Pr3 est choisi identique à l'axe optique du premier prisme 18-Pr1 ; l'axe optique du quatrième prisme 18-Pr4 est choisi identique à l'axe optique du deuxième prisme 18-Pr2. Le premier assemblage ayant un premier plan d'interface entre les premier et deuxième prismes 18-Pr1, 18-Pr2 accolés, et le deuxième assemblage ayant un deuxième plan d'interface entre les troisième et quatrième prismes 18-Pr3, 18-Pr4 accolés, le deuxième assemblage est agencé «tête-bêche» par rapport au premier assemblage, c'est-à-dire de manière que les premier et deuxième plans d'interface ne sont pas parallèles entre eux et présentent au contraire des pentes inversées. Les premier et deuxième assemblages peuvent présenter le même dimensionnement ou un dimensionnement différent ; le deuxième assemblage fixe peut notamment être plus petit que le premier assemblage mobile afin de diminuer le coût du montage. Un miroir M en autocorrélation est agencé en sortie du deuxième assemblage, ou alternativement un traitement réfléchissant est prévu en face de sortie du deuxième assemblage, de manière que la lumière suit un trajet aller à travers le polariseur 18-E2, la première optique de polarisation 18-E1 optionnelle le cas échéant, et les premier et deuxième assemblages ; puis un trajet retour à travers les deuxième et premier assemblages, la premier optique de polarisation 18-E1 optionnelle le cas échéant, et le polariseur 18-E2. Dans le cinquième dispositif 5 de la figure 1e, le polariseur 18-E2 est un prisme polarisant, par exemple un prisme de Glan-Thompson, qui réfléchit une composante de polarisation et transmet une autre composante de polarisation : pour l'application de l'invention, il s'agit de laisser passer toute la lumière du trajet aller afin de ne pas perturber le trajet aller, et de dévier une partie de la lumière du trajet retour vers la caméra 16. La lumière du trajet retour ne peut pas être entièrement déviée vers la caméra 16 car les deux répliques 13a, 13b du faisceau 13 qui parviennent sur le polariseur 18-E2 après les trajets aller et retour à travers les premier et deuxième assemblages ont des polarisations croisées, que le polariseur 18-E2 permet de projeter sur axe commun - de préférence la bissectrice des deux polarisations - afin qu'elles puissent interférer.

Dans le cinquième dispositif 5 de la figure 1e :

- la fonction d'optique de séparation est assurée par les premier et deuxième assemblages de prismes, avec le cas échéant la première optique de polarisation 18-E1 optionnelle en entrée du premier assemblage sur le trajet aller ; et
- la fonction d'optique de recombinaison est assurée par le polariseur 18-E2 avec le cas échéant la première optique de polarisation 18-E1 optionnelle en sortie du premier assemblage sur le trajet retour.

L'utilisation des premier et deuxième assemblages de prismes en série, dont les premier et deuxième plans d'interface présentent une pente inversée, présente l'avantage que le délai induit entre les deux bras ne dépend plus de la position d'entrée du faisceau 13. On s'affranchit ainsi d'une éventuelle perturbation ou fluctuation (« jitter » en anglais) spatiale de la source 12. L'utilisation des premier et deuxième assemblages de prismes en série, avec le même angle pour les quatre prismes 18-Pr1, 18-Pr2, 18-Pr3, 18-Pr4 présente également l'avantage de compenser la dispersion angulaire ou distorsion chromatique induite par le premier assemblage, du fait de la réfraction et du caractère dispersif du milieu sur des impulsions à large spectre. Ainsi, toutes les composantes spectrales restent bien parallèles entre elles en sortie des premier et deuxième assemblages. Enfin, l'utilisation des premier et deuxième assemblages de prismes en série présente l'avantage que tout décalage spatial entre les deux bras induit par le premier passage du trajet aller, du fait de la réfraction aux interfaces qui est différente pour les deux composantes de polarisation, est exactement compensé par le deuxième passage du trajet retour. Ainsi, les deux composantes de polarisation restent bien superposées spatialement l'une avec l'autre en sortie des premier et deuxième assemblages.

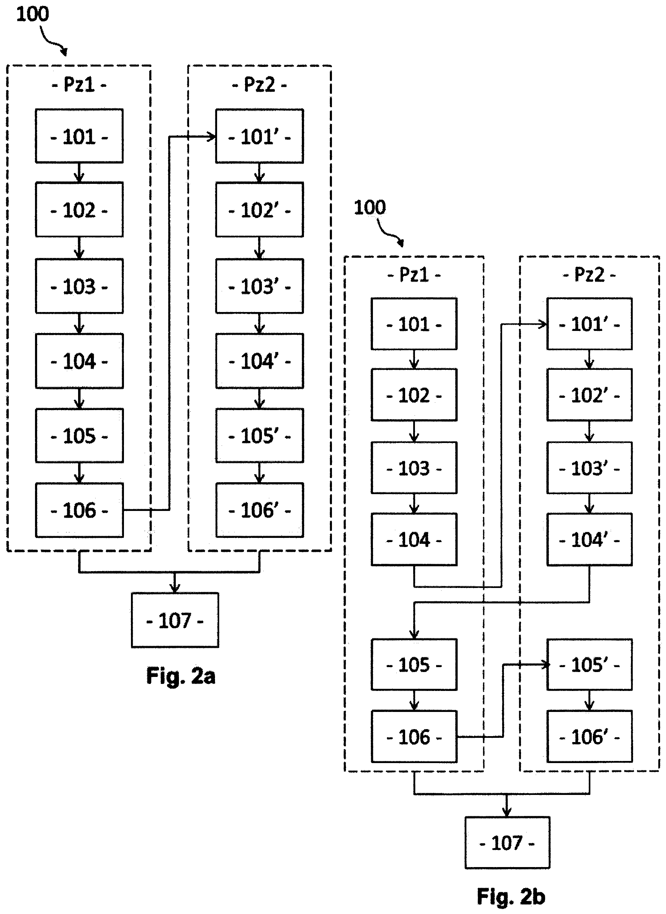

Les figures 2a et 2b montrent respectivement des premier et deuxième diagrammes des étapes du procédé 100 de caractérisation spatio-spectrale d'une source laser impulsionnelle polychromatique, au moyen du dispositif 1 précédemment décrit en lien avec la figure 1. Le premier diagramme de la figure 2a montre un premier ordre possible pour les différentes étapes du procédé 100, tandis que le deuxième diagramme de la figure 2b montre un deuxième ordre possible pour les différentes étapes du procédé 100.

Le procédé 100 comporte, pour un premier plan Pz1 du faisceau 13 de coordonnées $z_0$ selon la direction de propagation z :

- une première étape 101 selon laquelle on image le premier plan Pz1 sur la caméra 16 du système imageur. Le premier plan Pz1 est soit directement imagé sur la caméra 16, soit imagé sur la caméra 16 via l'objectif de microscope 17 ;
- une deuxième étape 102 selon laquelle on crée des première et deuxième répliques 13a, 13b du premier plan Pz1 au moyen des premier et deuxième bras 18a, 18b de l'interféromètre à division d'amplitude 18. Les première et deuxième répliques 13a, 13b présentent un certain délai $\tau$ entre elles ;
- une troisième étape 103 selon laquelle on recombine les première et deuxième répliques 13a, 13b du premier plan Pz1 sur la caméra 16 du système imageur de manière à obtenir une première image Im1 du premier plan Pz1 en deux dimensions spatiales et ayant des motifs d'interférences spatiales ;
- une quatrième étape 104 selon laquelle on mesure la première image Im1 en fonction du délai $\tau$ entre les première et deuxième répliques, le délai $\tau$ balayant un intervalle de temps $\Delta t$ avec un pas dt, pour l'obtention d'un interférogramme temporel en chaque point spatial du premier plan Pz1 imagé, l'ensemble des interférogrammes temporels formant un interférogramme spatio-temporel ;
- une cinquième étape 105 selon laquelle on calcule la transformée de Fourier 1D de chaque interférogramme temporel, ladite transformée de Fourier comportant un pic fréquentiel central et deux pics fréquentiels latéraux ;
- une sixième étape 106 selon laquelle on filtre ladite transformée de Fourier de manière à ne conserver que l'un des deux pics fréquentiels latéraux. Le résultat obtenu est traditionnellement vu comme étant un premier profil d'intensité spectrale du faisceau 13 en chaque point spatial du premier plan Pz1 imagé, mais on choisit plutôt de considérer que le résultat obtenu est un premier profil spatial d'amplitude en chaque fréquence du faisceau 13, c'est-à-dire le profil d'amplitude dans le premier plan Pz1 imagé, pour chaque fréquence du faisceau 13.

L'intervalle de temps $\Delta t$ est choisi en fonction de la résolution spectrale d$\omega$ souhaitée, selon la formule :

$$d\omega = \frac{2\pi}{\Delta t}$$

Lorsque l'interféromètre à division d'amplitude 18 est configuré en lame d'air, le pas de temps dt est choisi en fonction de la largeur spectrale $\Delta\Omega$, de manière que :

$$dt < \frac{\pi}{\Delta\Omega}$$

Aucune autre condition que la condition ci-dessus n'est en principe requise sur le pas de temps dt. En pratique, un pas de temps dt encore plus fin peut réduire le bruit de la mesure.

Lorsque l'interféromètre à division d'amplitude 18 est configuré en coin d'air et que la transformée de Fourier 3D de l'interférogramme spatio-temporel est calculée, le pas de temps dt est choisi en fonction de la largeur spectrale $\Delta\Omega$, de manière que :

$$dt < \frac{2\pi}{\Delta\Omega}$$

Aucune autre condition que la condition ci-dessus n'est en principe requise sur le pas de temps dt. En pratique, un pas de temps dt encore plus fin peut réduire le bruit de la mesure.

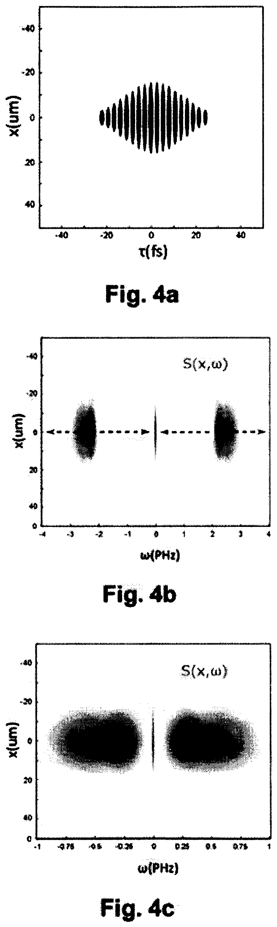

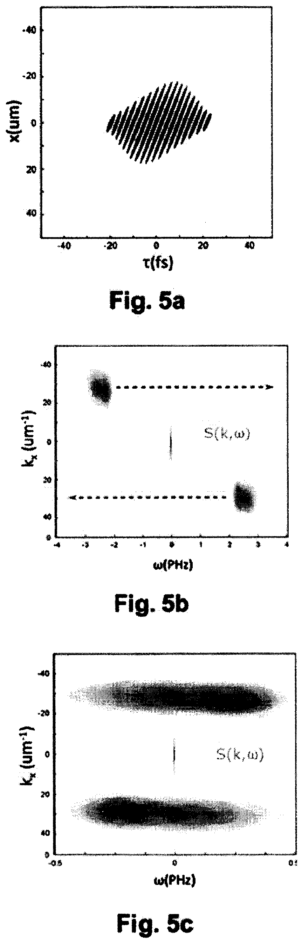

Lorsque l'interféromètre à division d'amplitude 18 est configuré en coin d'air et que la transformée de Fourier 3D de l'interférogramme spatio-temporel est calculée, il est avantageusement possible d'utiliser une fréquence d'échantillonnage inférieure à la fréquence d'échantillonnage minimum requise selon le critère de Nyquist dans une configuration en lame d'air, sans introduire de recouvrement spectral pour autant. De plus amples explications sont fournies ultérieurement, en lien avec les figures 4a, 4b, 4c dans le cas d'une configuration en lame d'air, et avec les figures 5a, 5b, 5c dans le cas d'une configuration en coin d'air.

Les première, deuxième, troisième, quatrième, cinquième et sixième étapes 101 à 106 réalisées pour le premier plan Pz1 du faisceau 13 sont également réalisées pour un deuxième plan Pz2 du faisceau 13: elles sont respectivement référencées 101' à 106' sur la figure 2 et brièvement rappelées ci-après. Le deuxième plan Pz2 du faisceau 13 est de coordonnées $z_0$ + dz selon la direction de propagation z. Le procédé 100 comporte donc, pour un deuxième plan Pz2 du faisceau 13 de coordonnées $z_0$ + dz selon la direction de propagation z :

- la première étape 101' selon laquelle on image, directement ou via l'objectif de microscope 17, le deuxième plan Pz2 sur la caméra 16 du système imageur ;
- la deuxième étape 102' selon laquelle on crée des première et deuxième répliques 13a', 13b' du deuxième plan Pz2, présentant un certain délai τ entre elles, au moyen des premier et deuxième bras 18a, 18b de l'interféromètre à division d'amplitude 18 ;
- la troisième étape 103' selon laquelle on recombine les première et deuxième répliques 13a', 13b' du deuxième plan Pz2 sur la caméra 16 du système imageur de manière à obtenir une deuxième image Im2 du deuxième plan Pz2 en deux dimensions spatiales et ayant des motifs d'interférences spatiales ;
- la quatrième étape 104' selon laquelle on mesure la deuxième image Im2 en fonction du délai τ entre les première et deuxième répliques, le délai τ balayant l'intervalle de temps Δt avec le pas dt, pour l'obtention d'un interférogramme temporel en chaque point spatial du deuxième plan Pz2 imagé, l'ensemble des interférogrammes temporels formant un interférogramme spatio-temporel ;
- la cinquième étape 105' selon laquelle on calcule la transformée de Fourier 1D de chaque interférogramme temporel, comportant un pic fréquentiel central et deux pics fréquentiels latéraux ;
- la sixième étape 106' selon laquelle on filtre ladite transformée de Fourier de manière à ne conserver que l'un des deux pics fréquentiels latéraux. De même que pour le premier plan Pz1, on choisit de considérer le résultat obtenu comme étant un deuxième profil spatial d'amplitude en chaque fréquence du faisceau 13, c'est-à-dire le profil d'amplitude dans le deuxième plan Pz2 imagé, pour chaque fréquence du faisceau 13.

Lors de la cinquième étape 105 réalisée pour le premier plan Pz1 et lors de la cinquième étape 105' réalisée pour le deuxième plan Pz2, on peut alternativement calculer la transformée de Fourier 3D de l'interférogramme spatio-temporel : ladite transformée de Fourier comporte également un pic fréquentiel central et deux pics fréquentiels latéraux. Dans cette alternative, après la sixième étape 106, 106' de filtrage, on réalise une transformée de Fourier 2D inverse afin de passer de l'espace (ω, $k_x$, $k_y$) à l'espace (ω, x, y).

La figure 2a montre une première alternative selon laquelle on réalise successivement :

- les première, deuxième, troisième, quatrième, cinquième et sixième étapes 101 à 106 pour le premier plan Pz1,
- puis les première, deuxième, troisième, quatrième, cinquième et sixième étapes 101' à 106' pour le deuxième plan Pz2,
- avant de réaliser une septième étape 107 ultérieurement décrite.

La figure 2b montre une deuxième alternative selon laquelle on réalise successivement :

- les première, deuxième, troisième et quatrième étapes 101 à 104 pour le premier plan Pz1, de manière à obtenir l'interférogramme spatio-temporel du premier plan Pz1,
- puis les première, deuxième, troisième et quatrième étapes 101' à 104' pour le deuxième plan Pz2, de manière à obtenir l'interférogramme spatio-temporel du deuxième plan Pz2,
- puis les cinquième et sixième étapes 105 et 106 de traitement de l'interférogramme spatio-temporel du premier plan Pz1,
- et enfin les cinquième et sixième étapes 105' et 106' de traitement de l'interférogramme spatio-temporel du deuxième plan Pz2,

- avant de réaliser la septième étape 107 ultérieurement décrite.

Selon une variante non illustrée de la deuxième alternative, il est également possible de réaliser successivement :

- les première, deuxième, troisième et quatrième étapes 101 à 104 pour le premier plan Pz1, de manière à obtenir l'interférogramme spatio-temporel du premier plan Pz1,
- puis les première, deuxième, troisième et quatrième étapes 101' à 104' pour le deuxième plan Pz2, de manière à obtenir l'interférogramme spatio-temporel du deuxième plan Pz2,
- puis les cinquième et sixième étapes 105' et 106' de traitement de l'interférogramme spatio-temporel du deuxième plan Pz2,
- et enfin les cinquième et sixième étapes 105 et 106 de traitement de l'interférogramme spatio-temporel du premier plan Pz1,
- avant de réaliser la septième étape 107 ultérieurement décrite.

Chaque image obtenue selon la troisième étape 103, 103' du procédé 100 comporte une information d'amplitude, en chaque point spatial r = (x, y) de ladite image.

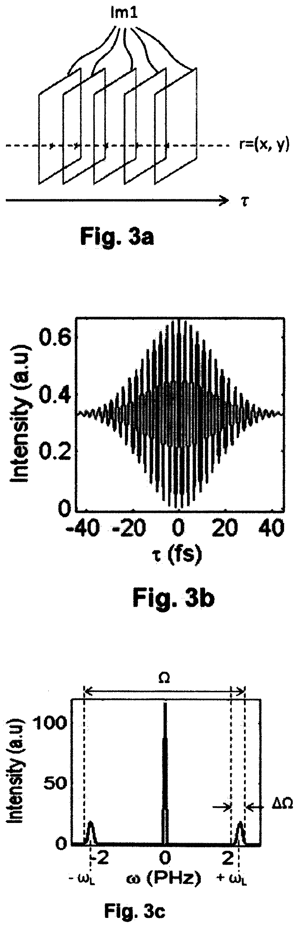

La figure 3a montre schématiquement une pluralité d'images d'un plan du faisceau 13 de la source laser impulsionnelle polychromatique 12, obtenues pour différents délais $\tau$ entre des première et deuxième répliques 13a, 13b du faisceau, selon la quatrième étape 104, 104' du procédé 100. La pluralité d'images est par exemple une pluralité de premières images Im1 du premier plan Pz1 du faisceau ou une pluralité de deuxièmes images Im2 du deuxième plan Pz2 du faisceau ou une pluralité d'images de tout autre plan du faisceau que l'on décide d'imager. La figure 3a montre en particulier un point spatial r = (x, y) de chaque image de la pluralité d'images.

La figure 3b montre un interférogramme temporel $S(\tau)$ obtenu pour le point spatial particulier r = (x, y) de la figure 3a, selon la quatrième étape 104, 104' du procédé 100. L'interférogramme temporel comporte l'information d'intensité en ce point spatial particulier, en fonction du délai $\tau$. A l'issue de la quatrième étape 104, 104', un tel interférogramme temporel est obtenu pour chaque point spatial du plan imagé. L'ensemble de ces interférogrammes temporels forme un interférogramme spatio-temporel : l'interférogramme spatio-temporel comporte l'information d'amplitude en tous les points spatiaux du plan imagé et en fonction du délai $\tau$.

La figure 3c montre la transformée de Fourier 1D $S(\omega)$ dans le domaine fréquentiel de l'interférogramme temporel $S(\tau)$ de la figure 3b, obtenue selon la sixième étape 106, 106' du procédé 100. La transformée de Fourier 1D $S(\omega)$ comporte un pic fréquentiel central en w = 0 et deux pics fréquentiels latéraux respectivement en - $\omega_L$ et + $\omega_L$.

La transformée de Fourier 1D $S(\omega)$ présente une largeur de support spectral $\Omega$ qui est définie par :

$$\Omega = \omega_{max} - \omega_{min}$$

La largeur de support spectral $\Omega$ est la différence entre la fréquence maximum $\omega_{max}$ et la fréquence minimum $\omega_{min}$ de la transformée de Fourier 1D $S(\omega)$. Comme l'interférogramme temporel $S(\tau)$ est une fonction réelle, sa transformée de Fourier est symétrique et la largeur de support spectral $\Omega$ est égale à :

$$\Omega = 2 \times \omega_{max}$$

Par ailleurs, la largeur du pic fréquentiel latéral centré en + $\omega_L$ est définie comme étant la largeur spectrale $\Delta\Omega$ de la transformée de Fourier 1D $S(\omega)$. L'échantillonnage de l'interférogramme temporel $S(\tau)$ avec un pas dt est équivalent à une multiplication de l'interférogramme temporel $S(\tau)$ par un peigne de Dirac et correspond dans le domaine spectral à la convolution du spectre $S(\omega)$ avec un peigne de fonctions de Dirac séparées de la fréquence d'échantillonnage $\Omega_{ech}$ :

$$\Omega_{ech} = \frac{2\pi}{dt}$$

Lorsque l'interférogramme temporel $S(\tau)$ est échantillonné, sa transformée de Fourier 1D $S(\omega)$ présente donc plusieurs répliques spectrales. Pour éviter que plusieurs répliques dues à l'échantillonnage ne se superposent, la fréquence d'échantillonnage $\Omega_{ech}$ doit notamment respecter le critère suivant :

$$\Omega_{ech} \geq 2 \times \Delta\Omega$$

Il s'agit du critère de Nyquist dans le cas d'une fonction temporelle réelle à contenu spectral centré sur une fréquence centrale + $\omega_L$, telle que l'interférogramme temporel $S(\tau)$.

La figure 4a montre une représentation en deux dimensions, selon une dimension temporelle $\tau$ et une première dimension spatiale x, d'un signal d'autocorrélation $S(x, y, \tau)$ résolu selon la première dimension spatiale x et selon une deuxième dimension spatiale y, dans le cas où, en sortie de l'interféromètre, les première et deuxième répliques 13a, 13b sont colinéaires entre elles, c'est-à-dire dans le cas où aucun angle n'est introduit entre les première et deuxième répliques 13a et 13b. Dans ce cas, la fréquence d'échantillonnage $\Omega_{ech}$ doit également respecter le critère suivant :

$$\Omega_{ech} \geq 2 \times \Delta\Omega$$

La figure 4b montre une représentation en deux dimensions, selon une dimension de fréquence temporelle $\omega$ et la première dimension spatiale x, de la transformée de Fourier 1D $S(x, y, \omega)$ du signal d'autocorrélation $S(x, y, \tau)$, pour une fréquence d'échantillonnage $\Omega_{ech}$ supérieure à la largeur de support spectral $\Omega$ :

$$\Omega_{ech} > 2\Omega$$

Dans ce cas, il n'y a pas de recouvrement ou repliement spectral mais la fréquence d'échantillonnage n'est pas optimisée.

La figure 4c montre une représentation en deux dimensions, selon la dimension de fréquence temporelle $\omega$ et le première dimension spatiale x, de la transformée de Fourier spatiale 1D $S(x, y, \omega)$ du signal d'autocorrélation $S(x, y, \tau)$, pour une fréquence d'échantillonnage $\Omega_{ech}$ optimisée égale à deux fois la largeur spectrale $\Delta\Omega$ :

$$\Omega_{ech} = 2 \times \Delta\Omega$$

Dans ce cas, il n'y a pas de recouvrement ou repliement spectral et la fréquence d'échantillonnage est optimisée. Si on diminuait encore la fréquence d'échantillonnage, il y aurait un recouvrement spectral de la transformée de Fourier spatiale 1D $S(x, y, \omega)$.

La figure 5a montre une représentation en deux dimensions, selon une dimension temporelle $\tau$ et une première dimensions spatiale x, d'un signal d'autocorrélation $S(x, y, \tau)$ résolu selon la première dimension spatiale x et selon une deuxième dimension spatiale y, dans le cas où, en sortie de l'interféromètre, les première et deuxième répliques 13a, 13b ne sont pas colinéaires entre elles, c'est-à-dire dans le cas où un angle $\alpha$ est introduit entre les première et deuxième répliques 13a et 13b. Cet angle $\alpha$ crée des franges d'interférences spatiales à chaque délai $\tau$, de fréquence spatiale $k_\alpha$ telle que :

$$k_\alpha = \frac{\alpha \times \omega_L}{c}$$

Dans ce cas, la fréquence d'échantillonnage $\Omega_{ech}$ doit simplement respecter le critère suivant :

$$\Omega_{ech} \geq \Delta\Omega$$

La figure 5b montre une représentation en deux dimensions, selon une dimension de fréquence temporelle $\omega$ et une dimension de fréquence spatiale $k_x$, de la transformée de Fourier 3D $S(k_x, k_y, \omega)$ du signal d'autocorrélation $S(x, y, \tau)$, pour une fréquence d'échantillonnage $\Omega_{ech}$ supérieure à la largeur de support spectral $\Omega$ :

$$\Omega_{ech} > \Omega$$

Dans ce cas, il n'y a pas de recouvrement ou repliement spectral mais la fréquence d'échantillonnage n'est pas optimisée.

La figure 5c montre une représentation en deux dimensions, selon une dimension de fréquence temporelle $\omega$ et une dimension de fréquence spatiale $k_x$, de la transformée de Fourier 3D $S(k_x, k_y, \omega)$ du signal d'autocorrélation $S(x, y, \tau)$, pour une fréquence d'échantillonnage $\Omega_{ech}$ optimisée égale à la largeur spectrale $\Delta\Omega$ :

$$\Omega_{ech} = \Delta\Omega$$

Dans ce cas, il n'y a pas de recouvrement ou repliement spectral et la fréquence d'échantillonnage est optimisée.

L'ajout de franges spatiales sur le signal d'autocorrélation spatio-temporel permet donc de réduire par deux la fréquence d'échantillonnage normalement imposée lorsqu'on travaille sur des signaux réels, et donc de réduire d'un même facteur le temps d'acquisition.

L'analyse mathématique associée aux première, deuxième, troisième, quatrième, cinquième et sixième étapes du procédé 100, précédemment décrites tant pour le premier plan Pz1 que pour le deuxième plan Pz2, est la suivante. Dans un souci d'allégement des notations, l'analyse mathématique est réalisée pour le cas où l'interféromètre à division d'amplitude 18 est parfaitement équilibré, c'est-à-dire pour le cas où l'interféromètre à division d'amplitude 18 présente la même énergie dans chacun de ses deux bras 18a, 18b. Mais en pratique, il n'est pas nécessaire que l'interféromètre à division d'amplitude 18 soit parfaitement équilibré. Dans les équations suivantes, la variable z n'est pas mentionnée mais elle est implicite. La variable z est égale à z1 dans le premier plan Pz1 et est égale à z2 = z1 + dz dans le deuxième plan Pz2. L'analyse qui suit est réalisée dans le cas où l'on réalise une transformée de Fourier 1D de chaque interférogramme temporel. Elle se généralise au cas où l'on réalise une transformée de Fourier 3D de l'interférogramme spatio-temporel, en effectuant d'abord une transformée de Fourier 2D en deux dimensions spatiales, puis une transformée de Fourier 1D à une dimension temporelle. Dans les équations qui suivent, on raisonne alors sur les variables de délai $\tau$ et de fréquence spatiale $k = (k_x, k_y)$, au lieu de raisonner sur les variables de délai $\tau$ et de position spatiale $r = (x, y)$.

Lors de la quatrième étape 104, 104' du procédé 100, chaque interférogramme temporel $S(\tau, r)$ obtenu, en fonction du délai $\tau$ entre les première et deuxième répliques, en un point spatial $r = (x, y)$ d'un plan imagé, s'exprime :

$$S(\tau, r) = \int |E(t, r) + E(t - \tau, r)|^2 \, dt$$

$$S(\tau, r) = 2\varepsilon(r) + J(\tau, r) + J^*(\tau, r)$$

où :

- $\varepsilon(r)$ est le signal obtenu avec un seul des deux bras de l'interféromètre au point spatial $r = (x, y)$ du plan imagé :

$$\varepsilon(r) = \int |E(t, r)|^2 dt$$

Le premier terme $2\varepsilon(r)$, indépendant de $\tau$, est la somme incohérente des première et deuxième répliques du faisceau.

- $J(\tau, r)$ est la fonction d'autocorrélation du champ électrique $E(t, r)$ :

$$J(\tau, r) = \int E(t, r) E^*(t - \tau, r) \, dt$$

- $J^*(\tau, r)$ est la fonction conjuguée de $J(\tau, r)$ :

$$J^*(\tau, r) = \int E^*(t, r) E(t - \tau, r) \, dt$$

En utilisant la décomposition en enveloppe complexe et porteuse, le champ électrique E(t, r) s'exprime :

$$E(t,r) = e^{i\omega_L t} E'(t,r)$$

La fonction d'autocorrélation $J(\tau,r)$ s'exprime alors :

$$J(\tau,r) = e^{i\omega_L \tau} \int E'(t,r)E'^*(t-\tau,r)dt$$

La fonction d'autocorrélation $J(\tau,r)$ oscille donc à la fréquence $\omega_L$ en fonction de $\tau$, tandis que sa fonction conjuguée $J^*(\tau,r)$ oscille à la fréquence $-\omega_L$ en fonction de $\tau$. Lors de la cinquième étape 105, 105' du procédé 100, la transformée de Fourier de l'interférogramme temporel $S(\tau,r)$ par rapport à $\tau$ comporte donc trois pics fréquentiels :

- un pic fréquentiel central en $\omega = 0$ correspondant au premier terme $2\varepsilon(r)$;
- un premier pic fréquentiel latéral en $\omega_L$ correspondant à la fonction d'autocorrélation $J(\tau,r)$;
- un deuxième pic fréquentiel latéral en $-\omega_L$ correspondant à la fonction conjuguée $J^*(\tau,r)$.

Lors de la sixième étape 106, 106' du procédé 100, en ne conservant que l'un des premier et deuxième pics fréquentiel latéraux, par exemple le premier pic fréquentiel latéral en $\omega_L$, on obtient la transformée de Fourier $J'(\omega,r)$ de la fonction d'autocorrélation $J(\tau,r)$, qui d'après le théorème de Wiener-Khintchine est égale à l'intensité spectrale :

$$\hat{J}(\omega,r) = \left|\hat{E}(x,y,\omega)\right|^2$$

On obtient ainsi l'intensité spectrale en tout point spatial du plan imagé considéré, que l'on choisit de considérer comme étant l'intensité spatiale en chaque fréquence du faisceau. L'amplitude spatiale en chaque fréquence du faisceau est alors obtenue en calculant la racine carrée de cette intensité spatiale en chaque fréquence du faisceau.

À partir du premier profil spatial d'amplitude résolu en fréquence $A_m(r, \omega, z1)$ obtenu pour le premier plan Pz1 du faisceau 13 et du deuxième profil spatial d'amplitude résolu en fréquence $A_m(r, \omega, z1+dz)$ obtenu pour le deuxième plan Pz2 du faisceau 13, le procédé 100 comporte ensuite, pour chaque fréquence du faisceau 13 de la source laser impulsionnelle polychromatique 12, une septième étape 107 de reconstruction du profil spatial de phase résolu en fréquence, au moyen d'un algorithme de reconstruction de phase spatiale.

Au moins deux profils spatiaux d'amplitude distincts résolus en fréquence sont nécessaires comme données d'entrée d'un algorithme de reconstruction de phase spatiale. En théorie, fournir deux profils spatiaux d'amplitude distincts résolus en fréquence est suffisant pour permettre la convergence d'un algorithme de reconstruction de phase spatiale, c'est-à-dire qu'il est inutile de fournir plus que deux profils spatiaux d'amplitude distincts résolus en fréquence. Toutefois, on constate en pratique que l'algorithme de reconstruction de phase spatiale converge mieux, avec une meilleure robustesse, lorsque trois profils spatiaux d'amplitude distincts résolus en fréquence sont fournis comme données d'entrée, plutôt que deux. On préfère donc également réaliser, pour le troisième plan Pz3 du faisceau 13, les première, deuxième, troisième, quatrième, cinquième et sixième étapes précédemment décrites pour les premier et deuxième plans Pz1, Pz2 du faisceau 13.

La septième étape 107 de reconstruction du profil spatial de phase résolu en fréquence est réalisée au moyen d'un algorithme de reconstruction de phase spatiale connu, qui utilise le fait que lorsqu'un faisceau laser monochromatique se propage le long de la direction de propagation z, l'évolution de son profil transverse d'amplitude selon la direction de propagation z est en partie déterminée par son profil transverse de phase. Il est important de noter que les algorithmes de reconstruction de phase spatiale connus fonctionnent uniquement pour des faisceaux lasers monochromatiques, c'est-à-dire ayant une seule fréquence. Dans le cas où le faisceau 13 polychromatique présente des couplages, il n'est pas possible de lui appliquer directement un tel algorithme de reconstruction de phase spatiale. L'algorithme de reconstruction de phase spatiale est donc appliqué séparément à chaque fréquence du faisceau laser 13 : pour chaque fréquence du faisceau 13, on exploite les premier et deuxième profils spatiaux d'amplitude $A_m(r, z1)$ et $A_m(r, z1+dz)$ à ladite fréquence pour déterminer le profil transverse de phase $\varphi(r)$ à ladite fréquence. On obtient alors le profil transverse de phase pour toutes les fréquences dans le premier plan Pz1 qui, combiné au profil d'amplitude $A_m(r, z1)$ donne une caractérisation complète des couplages spatio-spectraux du faisceau 13.

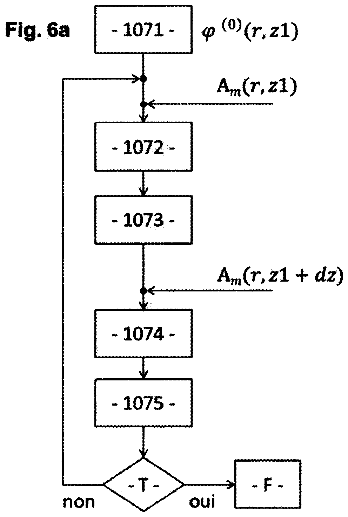

Un premier exemple d'algorithme de reconstruction de phase spatiale à partir de deux profils spatiaux d'amplitude est décrit en lien avec la figure 6a.

On démarre l'algorithme par une première étape 1071 dans laquelle on génère un profil de phase aléatoire $\varphi^{(n=0)}(r, z1)$ avec des valeurs comprises entre $-\pi$ et $\pi$. Dans une deuxième étape 1072, on utilise ensuite le profil de phase aléatoire $\varphi^{(n=0)}(r, z1)$ et le premier profil spatial d'amplitude $A_m(r, z1)$ pour définir un champ électrique complexe $\hat{E}^{(n=0)}(r, z1)$ :

$$\hat{E}^{(n=0)}(r, z1) = A_m(r, z1) \times \exp\left(i\,\varphi^{(n=0)}(r, z1)\right)$$

Dans une troisième étape 1073, on calcule un champ électrique complexe $\hat{E}^{(n=0)}(r, z1 + dz)$ en propageant numériquement le champ électrique complexe $\hat{E}^{(n=0)}(r, z1)$ de la distance de $dz$ dans la direction de propagation z :

$$\hat{E}^{(n=0)}(r, z1 + dz) = A^{(n=0)}(r, z1 + dz) \times \exp\left(i\,\varphi^{(n=0)}(r, z1 + dz)\right)$$

Dans une quatrième étape 1074, on remplace le profil spatial d'amplitude calculé $A^{(n=0)}(r, z1 + dz)$ par le deuxième profil spatial d'amplitude $A_m(r, \omega, z1+dz)$ puis, dans une cinquième étape 1075, on rétro-propage numériquement le champ électrique complexe obtenu de la distance $-dz$ dans la direction de propagation z, de manière à obtenir un champ électrique complexe $\hat{E}^{(n=1)}(r, z1)$ tel que :

$$\hat{E}^{(n=1)}(r, z1) = A^{(n=1)}(r, z1) \times \exp\left(i\,\varphi^{(n=1)}(r, z1)\right)$$

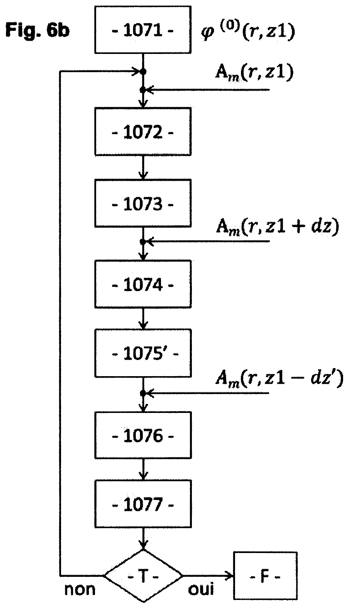

On réalise alors une étape T de test d'une fonction de mérite qui est par exemple la distance quadratique normalisée entre les amplitudes des images mesurées et calculées : en pratique, on décide typiquement d'arrêter l'algorithme lorsque la distance quadratique normalisée n'évolue plus d'une itération à l'autre, c'est-à-dire lorsque la distance quadratique normalisée cesse de décroître d'une itération à l'autre. On peut également utiliser la fonction de mérite pour évaluer la qualité du résultat obtenu, c'est-à-dire pour évaluer si le profil spatial d'amplitude calculé à l'issue de la cinquième étape 1075 est suffisamment proche de l'amplitude mesurée $A_m(r, z1)$.
Si le test est négatif, on itère la deuxième étape 1072 en utilisant non plus le profil de phase aléatoire $\varphi^{(n=0)}(r, z1)$ initial, mais le profil de phase $\varphi^{(n=1)}(r, z1)$ obtenu à l'issue de la cinquième étape 1075, et ainsi de suite.
Si le test est positif, le profil de phase associé est alors considéré comme correct et conservé, et selon une étape F, l'algorithme de reconstruction de phase spatiale prend fin.
Un deuxième exemple d'algorithme de reconstruction de phase spatiale à partir de trois profils spatiaux d'amplitude est décrit en lien avec la figure 6b : les premier et deuxième profils spatiaux d'amplitude $A_m(r, z1)$ et $A_m(r, z1+dz)$, ainsi qu'un troisième profil spatial d'amplitude $A_m(r, z1-dz')$ dans le troisième plan Pz3. Le deuxième exemple de la figure 6b comporte les première, deuxième, troisième et quatrième étapes 1071, 1072, 1073 et 1074 précédemment décrites, puis :
une cinquième étape 1075' selon laquelle on rétro-propage numériquement le champ électrique complexe obtenu à l'issue de la quatrième étape 1074 de la distance $-(dz+dz')$ dans la direction de propagation z, de manière à obtenir un champ électrique complexe $\hat{E}^{(n=0)}(r, z1-dz')$ tel que :

$$\hat{E}^{(n=0)}(r, z1 - dz') = A^{(n=0)}(r, z1 - dz') \times \exp\left(i\,\varphi^{(n=0)}(r, z1 - dz')\right)$$

- une sixième étape 1076 selon laquelle on remplace le profil spatial d'amplitude calculé $A^{(1)}(r, z_0 - dz')$ par un troisième profil spatial d'amplitude $A_m(r, \omega, z1-dz')$ ;
- une septième étape 1077 selon laquelle on propage numériquement le champ électrique complexe obtenu à l'issue de la sixième étape 1076 de la distance $+dz'$ dans la direction de propagation z, de manière à obtenir un champ électrique complexe $\hat{E}^{(n=1)}(r, z1)$ tel que :

$$\hat{E}^{(n=1)}(r, z1) = A^{(n=1)}(r, z1) \times \exp\left(i\,\varphi^{(n=1)}(r, z1)\right)$$

On réalise alors l'étape T de test d'une fonction de mérite, précédemment décrite. Si le test est négatif, on itère la deuxième étape 1072 en utilisant non plus le profil de phase aléatoire $\varphi^{(n=0)}$(r, z1) initial, mais le profil de phase $\varphi^{(n=1)}$(r, z1) obtenu à l'issue de la septième étape 1077, et ainsi de suite.

Si le test est positif, le profil de phase associé est alors considéré comme correct et conservé, et selon l'étape F précédemment décrite, l'algorithme de reconstruction de phase spatiale prend fin.

D'autres algorithmes connus de reconstruction de phase spatiale peuvent être utilisés. De tels algorithmes sont par exemple décrits dans l'article « Phase retrieval algorithms : a comparison », J. R. Fienup, Applied Optics (1982) et dans l'article « Phase retrieval with application to optical imaging », Y. Shechtman et al., IEEE Signal Processing Magazine (2015).

Un avantage du mode de réalisation préféré de l'invention, selon lequel l'interféromètre à division d'amplitude 18 est configuré en coin d'air, est qu'il permet de réaliser un procédé de correction numérique des fluctuations de pointé du faisceau laser 13 pour chaque image de la pluralité de premières images Im1 et de la pluralité de deuxièmes images Im2. On entend par « fluctuations de pointé » le fait que la position spatiale de la tache focale, et donc de son image sur le capteur de la caméra, est susceptible de varier d'une impulsion à l'autre. La difficulté pour corriger de telles fluctuations de pointé provient du fait que les motifs d'interférences spatiales changent d'une image à l'autre, en plus de la variation de position spatiale de la tache focale. Le procédé de correction numérique des fluctuations de pointé selon un aspect de l'invention s'applique à toute image de la pluralité de premières images Im1 et de la pluralité de deuxièmes images Im2 ayant des franges d'interférences spatiales et comporte les étapes suivantes :

- calculer la transformée de Fourier spatiale à deux dimensions de ladite image, de façon à obtenir une image réciproque comportant un pic fréquentiel central et deux pics fréquentiels latéraux ;
- modifier l'image réciproque grâce aux propriétés du pic fréquentiel central ;
- calculer la transformée de Fourier spatiale inverse de l'image réciproque modifiée de façon à revenir dans l'espace initial. On obtient alors dans l'espace initial une image réelle centrée.

Dans le cas d'une transformée de Fourier spatiale, les pics fréquentiels dont il est fait mention dans l'image réciproque sont chacun associés à une certaine fréquence spatiale.

Le pic fréquentiel central correspond à la somme incohérente des deux répliques du faisceau, dont on sait qu'elle ne se déforme pas d'une image à l'autre et qui peut donc servir de référence. L'étape selon laquelle on modifie l'image réciproque grâce aux propriétés du pic fréquentiel central peut par exemple comporter les sous-étapes suivantes :

- calculer la pente de la phase du pic fréquentiel central à l'aide d'un ajustement linéaire ;
- soustraire la pente calculée à la phase du pic fréquentiel central et à la phase de chaque pic fréquentiel latéral.

**Revendications**

1. Procédé (100) de caractérisation spatio-spectrale d'une source laser impulsionnelle polychromatique, dans un dispositif (1) comportant :

   - une source laser impulsionnelle polychromatique (12) émettant un faisceau (13) comportant une pluralité d'impulsions lasers de largeur spectrale $\Delta\Omega$ dans une direction de propagation z ;
   - une optique de focalisation (14) focalisant le faisceau (13) dans un plan focal en $z_0$ ;
   - un système imageur pour imager un premier plan (Pz1) du faisceau en z1 à proximité du plan focal $z_0$ et un deuxième plan (Pz2) du faisceau en z1 + dz, le système imageur comportant au moins une caméra (16) ;
   - un interféromètre à division d'amplitude (18) agencé entre l'optique de focalisation (14) et la caméra (16) et ayant des premier et deuxième bras (18a, 18b) ;

   le procédé (100) comportant, pour chacun des premier (Pz1) et deuxième (Pz2) plans du faisceau, les étapes suivantes :

   - imager (101, 101') le plan (Pz1, Pz2) du faisceau (13) au moyen du système imageur ;
   - créer (102, 102') des première et deuxième répliques (13a, 13b) du faisceau (13) au moyen des premier et deuxième bras (18a, 18b) de l'interféromètre à division d'amplitude (18) ;
   - recombiner (103, 103') les première et deuxième répliques (13a, 13b) du faisceau (13) sur la caméra (16) du système imageur, de manière à obtenir une image (Im1, Im2) en deux dimensions spatiales ayant des motifs d'interférences spatiales ;
   - mesurer (104, 104') cette image en fonction d'un délai $\tau$ entre les première et deuxième répliques, le délai $\tau$

balayant un intervalle de temps Δt avec un pas dt, pour l'obtention d'un interférogramme temporel en chaque point spatial de l'image (Im1, Im2), l'ensemble des interférogrammes temporels formant un interférogramme spatio-temporel ;
- calculer (105, 105') la transformée de Fourier 1D de chaque interférogramme temporel ou la transformée de Fourier 3D de l'interférogramme spatio-temporel, ladite transformée de Fourier comportant un pic fréquentiel central et deux pics fréquentiels latéraux ;
- filtrer (106, 106') ladite transformée de Fourier de manière à ne conserver que l'un des deux pics fréquentiels latéraux ;

le procédé (100) comportant ensuite, pour chaque fréquence de la source laser impulsionnelle polychromatique (12), une étape (107) de reconstruction du profil spatial de phase résolu en fréquence à partir d'un premier profil spatial d'amplitude résolu en fréquence obtenu pour le premier plan (Pz1) du faisceau et d'un deuxième profil spatial d'amplitude résolu en fréquence obtenu pour le deuxième plan (Pz2) du faisceau.

2. Procédé (100) de caractérisation spatio-spectrale selon la revendication 1, **caractérisé en ce que** l'interféromètre à division d'amplitude (18) est configuré en coin d'air de manière que ses premier et deuxième bras (18a, 18b) présentent un angle entre eux et que les motifs d'interférences spatiales obtenus lors de la recombinaison des première et deuxième répliques (13a, 13b) du faisceau (13) sur la caméra (16) du système imageur sont des franges d'interférences spatiales.

3. Procédé (100) de caractérisation spatio-spectrale selon la revendication 2, **caractérisé en ce qu'**il comporte par ailleurs, pour chaque image (Im1, Im2) ayant des franges d'interférences spatiales, les étapes suivantes :

- calculer la transformée de Fourier spatiale à deux dimensions de ladite image, de façon à obtenir une image réciproque comportant un pic fréquentiel central et deux pics fréquentiels latéraux ;
- modifier l'image réciproque grâce aux propriétés du pic fréquentiel central ;
- calculer la transformée de Fourier spatiale inverse de l'image réciproque modifiée de façon à revenir dans l'espace initial.

4. Procédé (100) de caractérisation spatio-spectrale selon la revendication 3, **caractérisé en ce que** l'angle entre les premier et deuxième bras (18a, 18b) de l'interféromètre à division d'amplitude (18) est choisi de manière que chaque frange d'interférence spatiale s'étend sur au moins deux pixels de la caméra (16).

5. Procédé (100) de caractérisation spatio-spectrale selon l'une quelconque des revendications 2 à 4, **caractérisé en ce que** le pas dt est choisi tel que :

$$dt \leq \frac{2\pi}{\Delta\Omega}$$

et **en ce qu'**on calcule (105, 105') la transformée de Fourier 3D de l'interférogramme spatio-temporel.

6. Procédé (100) de caractérisation spatio-spectrale selon l'une quelconque des revendications précédentes, **caractérisé en ce que** l'interféromètre à division d'amplitude (18) est un interféromètre de type Mach-Zehnder.

7. Procédé (100) de caractérisation spatio-spectrale selon la revendication 1, **caractérisé en ce que** les premier et deuxième bras (18a, 18b) de l'interféromètre à division d'amplitude (18) présentent une même longueur de chemin optique et un indice de réfraction différent.

8. Procédé (100) de caractérisation spatio-spectrale selon la revendication précédente, **caractérisé en ce que** dans l'interféromètre à division d'amplitude (18), une fonction d'optique séparatrice est assurée par un matériau biréfringent (18-Pr1, 18-Pr2, 18-Pr3, 18-Pr4) et une fonction d'optique de recombinaison est assurée par un polariseur (18-E2).

9. Procédé (100) de caractérisation spatio-spectrale selon l'une quelconque des revendications 7 ou 8, **caractérisé en ce que** l'interféromètre à division d'amplitude (18) comporte un premier assemblage d'un premier prisme (18-Pr1) et d'un deuxième prisme (18-Pr2) accolés, réalisés dans un même type de matériau biréfringent uniaxe et ayant leurs axes optiques perpendiculaires, le premier assemblage étant placé sur une platine (18-P) afin de contrôler un délai entre les premier et deuxième bras (18a, 18b) de l'interféromètre à division d'amplitude (18).

**10.** Procédé (100) de caractérisation spatio-spectrale selon la revendication précédente, **caractérisé en ce que** :

- l'interféromètre à division d'amplitude comporte un deuxième assemblage d'un troisième prisme (18-Pr3) et d'un quatrième prisme (18-Pr4) accolés, réalisés dans le même type de matériau biréfringent uniaxe et avec le même angle que les premier et deuxième prismes (18-Pr1, 18-Pr2) ; l'axe optique du troisième prisme (18-Pr3) étant identique à l'axe optique du premier prisme (18-Pr1) et l'axe optique du quatrième prisme (18-Pr4) étant identique à l'axe optique du deuxième prisme (18-Pr2) ; le premier assemblage ayant un premier plan d'interface entre les premier et deuxième prismes (18-Pr1, 18-Pr2) accolés et le deuxième assemblage ayant un deuxième plan d'interface entre les troisième et quatrième prismes (18-Pr3, 18-Pr4) accolés, le deuxième assemblage étant agencé par rapport au premier assemblage de manière que les premier et deuxième plans d'interface ne sont pas parallèles entre eux et présentent au contraire des pentes inversées ; et
- le faisceau (13) parcourant un trajet aller à travers les premier et deuxième assemblages et un trajet retour à travers les deuxième et premier assemblages.

**Patentansprüche**

**1.** Spektral-räumliches Charakterisierungsverfahren (100) einer polychromatischen Impuls-Laserquelle in einer Vorrichtung (1), umfassend:

- eine polychromatische Impuls-Laserquelle (12), die ein Strahlenbündel (13) ausgibt, das eine Vielzahl von Laserimpulsen mit einer Spektralbreite $\Delta\Omega$ in einer Verbreitungsrichtung z umfasst;
- eine optische Fokalisierung (14), die den Strahl (13) in einer fokalen Ebene in $z_0$ fokalisiert;
- ein Abbildungssystem zum Abbilden einer ersten Ebene (Pz1) des Strahlenbündels in z1 in der Nähe der fokalen Ebene $z_0$ und einer zweiten Ebene (Pz2) des Strahlenbündels in z1 + dz, wobei das Abbildungssystem wenigstens eine Kamera (16) umfasst;
- ein Interferometer mit Amplitudendivision (18), das zwischen der Fokalisierungsoptik (14) und der Kamera (16) angeordnet ist und erste und zweite Arme (18a, 18b) aufweist;

wobei das Verfahren (100) für jede der ersten (Pz1) und der zweiten (Pz2) Ebene des Strahlenbündels die folgenden Schritte umfasst:

- Abbilden (101, 101') der Ebene (Pz1, Pz2) des Strahlenbündels (13) mittels des Abbildungssystems;
- Erstellen (102, 102') der ersten und der zweiten Nachbildung (13a, 13b) des Strahlenbündels (13) mittels des ersten und des zweiten Arms (18a, 18b) des Interferometers mit Amplitudendivision (18);
- Rekombinieren (103, 103') der ersten und der zweiten Replik (13a, 13b) des Strahlenbündels (13) auf der Kamera (16) des Abbildungssystems derart, dass ein Bild (Im1, Im2) in zwei räumlichen Dimensionen mit räumlichen Interferenzmustern erhalten wird;
- Messen (104, 104') dieses Bildes in Abhängigkeit von einer Frist T zwischen der ersten und der zweiten Nachbildung, wobei die Frist T ein Zeitintervall $\Delta t$ mit einem Schritt dt für den Erhalt eines zeitlichen Interferogramms in jedem räumlichen Punkt des Bildes (Im1, Im2) abtastet, wobei alle zeitlichen Interferogramme ein räumlich-zeitliches Interferogramm bilden;
- Berechnen (105, 105') der Fourier-Transformierten 1D jedes zeitlichen Interferogramms oder der Fourier-Transformierten ID des räumlich-zeitlichen Interferogramms, wobei die genannte Fourier-Transformierte eine zentrale Frequenzspitze und zwei seitliche Frequenzspitzen umfasst;
- Filtern (106, 106') der genannten Fourier-Transformierten derart, dass nur eine der zwei seitlichen Frequenzspitzen behalten wird;

wobei das Verfahren (100) anschließend für jede Frequenz der polychromatischen Impuls-Laserquelle (12) einen Wiederaufbauschritt (107) des räumlichen Phasenprofils, der ausgehend von einem ersten, in der Frequenz aufgelösten räumlichen Amplitudenprofil in der Frequenz aufgelöst ist, das für die erste Ebene (Pz1) des Strahlenbündels erhalten wird, und einem zweiten, in der Frequenz aufgelösten räumlichen Amplitudenprofil, das für die zweite Ebene (Pz2) des Strahlenbündels erhalten wird, umfasst.

**2.** Spektral-räumliches Charakterisierungsverfahren (100) gemäß Anspruch 1, **dadurch gekennzeichnet, dass** das Interferometer mit Amplitudendivision (18) derart als Luftkeil ausgestaltet ist, dass sein erster und sein zweiter Arm (18a, 18b) untereinander einen Winkel aufweisen und dass die räumlichen Interferenzmuster, die bei der Rekombination der ersten und der zweiten Nachbildung (13a, 13b) des Strahlenbündels (13) auf der Kamera (16) des Abbildungssystems erhalten werden, räumliche Interferenzstreifen sind.

3. Spektral-räumliches Charakterisierungsverfahren (100) gemäß Anspruch 2, **dadurch gekennzeichnet, dass** es im Übrigen für jedes Bild (Im1, Im2), das räumliche Interferenzstreifen aufweist, die folgenden Schritte umfasst:

- Berechnen der räumlichen Fourier-Transformierten mit zwei Abmessungen des genannten Bildes derart, dass ein beiderseitiges Bild erhalten wird, das eine zentrale Frequenzspitze und zwei seitliche Frequenzspitzen umfasst;
- Ändern des beiderseitigen Bildes dank der Eigenschaften der zentralen Frequenzspitze;
- Berechnen der umgekehrten räumlichen Fourier-Transformierten des abgeänderten beiderseitigen Bildes derart, dass es in den ursprünglichen Raum zurückkehrt.

4. Spektral-räumliches Charakterisierungsverfahren (100) gemäß Anspruch 3, **dadurch gekennzeichnet, dass** der Winkel zwischen dem ersten und dem zweiten Arm (18a, 18b) des Interferometers mit Amplitudendivision (18) derart ausgewählt ist, dass jeder räumliche Interferenzstreifen sich über wenigstens zwei Pixel der Kamera (16) erstreckt.

5. Spektral-räumliches Charakterisierungsverfahren (100) gemäß irgendeinem der Ansprüche 2 bis 4, **dadurch gekennzeichnet, dass** der Schritt dt derart ausgewählt ist, dass

$$dt \leq \frac{2\pi}{\Delta\Omega}$$

und dass die Fourier-Transformierte 3D des räumlich-zeitlichen Interferogramms berechnet wird (105, 105').

6. Spektral-räumliches Charakterisierungsverfahren (100) gemäß irgendeinem der voranstehenden Ansprüche, **dadurch gekennzeichnet, dass** das Interferometer mit Amplitudendivision (18) ein Interferometer vom Typ Mach-Zehnder ist.

7. Spektral-räumliches Charakterisierungsverfahren (100) gemäß Anspruch 1, **dadurch gekennzeichnet, dass** der erste und der zweite Arm (18a, 18b) des Interferometers mit Amplitudendivision (18) eine und dieselbe optische Weglänge und einen unterschiedlichen Brechungsindex aufweisen.

8. Spektral-räumliches Charakterisierungsverfahren (100) gemäß dem voranstehenden Anspruch, **dadurch gekennzeichnet, dass** in dem Interferometer mit Amplitudendivision (18) eine trennende optische Funktion durch ein doppelbrechendes Material (18-Pr1, 18-Pr2, 18-Pr3, 18-Pr4) gewährleistet ist und eine optische Rekombinationsfunktion durch einen Polarisierer (18-E2) gewährleistet ist.

9. Spektral-räumliches Charakterisierungsverfahren (100) gemäß irgendeinem der Ansprüche 7 oder 8, **dadurch gekennzeichnet, dass** das Interferometer mit Amplitudendivision (18) eine erste Gruppe eines ersten Prismas (18-Pr1) und eines zweiten Prismas (18-Pr2) umfasst, die aneinander angebaut, aus einem und demselben einachsigen doppelbrechenden Materialtyp realisiert sind und deren optische Achsen lotrecht sind, wobei die erste Gruppe auf einer Platine (18-P) angeordnet ist, um eine Frist zwischen dem ersten und dem zweiten Arm (18a, 18b) des Interferometers mit Amplitudendivision (18) zu kontrollieren.

10. Spektral-räumliches Charakterisierungsverfahren (100) gemäß dem voranstehenden Anspruch, **dadurch gekennzeichnet, dass**:

- das Interferometer mit Amplitudendivision eine zweite Gruppe eines dritten Prismas (18-Pr3) und eines vierten Prismas (18-Pr4) umfasst, die aneinander angebaut, aus einem und demselben einachsigen doppelbrechenden Materialtyp und mit demselben Winkel wie das erste und das zweite Prisma (18-Pr1, 18-Prs) realisiert sind; wobei die optische Achse des dritten Prismas (18-Pr3) mit der optischen Achse des ersten Prismas (18-Pr1) identisch ist und die optische Achse des vierten Prismas (18-Pr4) mit der optischen Achse des zweiten Prismas (18-Pr2) identisch ist; wobei die erste Gruppe eine erste Interferenzebene zwischen dem ersten und dem zweiten Prisma (18-Pr1, 18-Pr2), die aneinander angebaut sind, aufweist, und die zweite Gruppe eine zweite Interferenzeben zwischen dem dritten und dem vierten Prisma (18-Pr3, 18-Pr4), die aneinander angebaut sind, aufweist, wobei die zweite Gruppe in Bezug auf die erste Gruppe derart angeordnet ist, dass die erste und die zweite Interferenzebene zueinander nicht parallel sind und stattdessen umgekehrte Neigungen aufweisen; und
- das Strahlenbündel (13) einen Hinweg durch die erste und die zweite Gruppe und einen Rückweg durch die zweite und die erste Gruppe durchläuft.

**Claims**

1. Method (100) for spatio-spectral characterisation of a polychromatic pulsed laser source, in a device (1) comprising:

   - a polychromatic pulsed laser source (12) emitting a beam (13) comprising a plurality of laser pulses with a spectral width $\Delta\Omega$ in a direction of propagation z;
   - focussing optics (14) that focus the beam (13) in a focal plane in zo;
   - an imaging system for imaging a first plane (Pz1) of the beam in z1 in the vicinity of the focal plane $z_0$ and a second plane (Pz2) of the beam in z1 + dz, the imaging system comprising at least one camera (16);
   - an amplitude division interferometer (18) arranged between the focussing optics (14) and the camera (16) and having first and second arms (18a, 18b);

   the method (100) comprising, for each one of the first (Pz1) and second (Pz2) planes of the beam, the following steps:

   - imaging (101, 101') the beam (13) plane (Pz1, Pz2) using the imaging system;
   - creating (102, 102) first and second replicas (13a, 13b) of the beam (13) using first and second arms (18a, 18b) of the amplitude division interferometer (18);
   - recombining (103, 103') the first and second replicas (13a, 13b) of the beam (13) on the camera (16) of the imaging system, so as to obtain an image (Im1, Im2) in two spatial dimensions having spatial interference patterns;
   - measuring (104, 104') this image according to a time $\tau$ between the first and second replicas, the time $\tau$ sweeping a time interval $\Delta t$ with a step dt, in order to obtain a temporal interferogram at each spatial point of the image (Im1, Im2), the set of temporal interferograms forming a spatio-temporal interferogram;
   - calculating (105, 105') the 1D Fourier transform of each temporal interferogram or the 3D Fourier transform of the spatio-temporal interferogram, said Fourier transform comprising a central frequency peak and two frequency side peaks;
   - filtering (106, 106') said Fourier transform so as to conserve only one of the two frequency side peaks;

   the method (100) then comprising, for each frequency of the polychromatic pulsed laser source (12), a step (107) of reconstructing the frequency-resolved spatial phase profile using a first frequency-resolved spatial amplitude profile obtained for the first beam plane (Pz1) and a second frequency-resolved spatial amplitude profile obtained for the second beam plane (Pz2).

2. Method (100) for spatio-spectral characterisation according to claim 1, **characterised in that** the amplitude division interferometer (18) is configured as an air corner in such a way that its first and second arms (18a, 18b) have an angle between them and **in that** the spatial interference patterns obtained during the recombining of the first and second replicas (13a, 13b) of the beam (13) on the camera (16) of the imaging system are spatial interference fringes.

3. Method (100) for spatio-spectral characterisation according to claim 2, **characterised in that** it includes moreover, for each image (Im1, Im2) having spatial interference fringes, the following steps:

   - calculating the two-dimensional spatial Fourier transform of said image, in such a way as to obtain a reciprocal image including a central frequency peak and two frequency side peaks;
   - modifying the reciprocal image thanks to the properties of the central frequency peak;
   - calculating the inverse spatial Fourier transform of the modified reciprocal image in such a way as to return to the initial space.

4. Method (100) for spatio-spectral characterisation according to claim 3, **characterised in that** the angle between the first and second arms (18a, 18b) of the amplitude division interferometer (18) is chosen in such a way that each spatial interference fringe extends over at least two pixels of the camera (16).

5. Method (100) for spatio-spectral characterisation according to any of claims 2 to 4, **characterised in that** the step dt is chosen such that:

$$dt \leq \frac{2\pi}{\Delta\Omega}$$

and **in that** the 3D Fourier transform of the spatio-temporal interferogram is calculated (105, 105').

6. Method (100) for spatio-spectral characterisation according to any preceding claim, **characterised in that** the amplitude division interferometer (18) is an interferometer of the Mach-Zehnder type.

7. Method (100) for spatio-spectral characterisation according to claim 1, **characterised in that** the first and second arms (18a, 18b) of the amplitude division interferometer (18) have the same optical path length and a different refractive index.

8. Method (100) for spatio-spectral characterisation according to the preceding claim, **characterised in that** in the amplitude division interferometer (18), an optical separating function is provided by a birefringent material (18-Pr1, 18-Pr2, 18-Pr3, 18-Pr4) and an optical recombining function is provided by a polarizer (18-E2).

9. Method (100) for spatio-spectral characterisation according to any of claims 7 or 8, **characterised in that** the amplitude division interferometer (18) comprises a first assembly of a first prism (18-Pr1) and of a second prism (18-Pr2) adjoining, made from the same type of uniaxial birefringent material and having their optical axes perpendicular, the first assembly being placed on a plate (18-P) in order to control a time between the first and second arms (18a, 18b) of the amplitude division interferometer (18).

10. Method (100) for spatio-spectral characterisation according to the preceding claim, **characterised in that**:

    - the amplitude division interferometer comprises a second assembly of a third prism (18-Pr3) and of a fourth prism (18-Pr4) adjoining, made from the same type of uniaxial birefringent material and with the same angle as the first and second prisms (18-Pr1, 18-Pr2); the optical axis of the third prism (18-Pr3) being identical to the optical axis of the first prism (18-Pr1) and the optical axis of the fourth prism (18-Pr4) being identical to the optical axis of the second prism (18-Pr2); the first assembly having a first interface plane between the first and second prisms (18-Pr1, 18-Pr2) adjoining and the second assembly having a second interface plane between the third and fourth prisms (18-Pr3, 18-Pr4) adjoining, the second assembly being arranged with respect to the first assembly in such a way that the first and second interface planes are not parallel to one another and on the contrary have reversed slopes; and
    - the beam (13) travelling an outward path through the first and second assemblies and an inward return path through the second and first assemblies.

**Fig. 1a**

**Fig. 1b**

**Fig. 1c**

Fig. 1d

Fig. 1e

Fig. 2a

Fig. 2b

**Fig. 3a**

**Fig. 3b**

**Fig. 3c**

Fig. 4a

Fig. 4b

Fig. 4c

**Fig. 5a**

**Fig. 5b**

**Fig. 5c**

**Fig. 6a**

$$\boxed{-1071-}\quad \varphi^{(0)}(r,z1)$$

$$A_m(r,z1)$$

$$\boxed{-1072-}$$

$$\boxed{-1073-}$$

$$A_m(r,z1+dz)$$

$$\boxed{-1074-}$$

$$\boxed{-1075-}$$

$$\diamond\; -T-\;\diamond$$

non    oui    $\boxed{-F-}$

**Fig. 6b**

$$\varphi^{(0)}(r, z1)$$

- 1071 -

$$A_m(r, z1)$$

- 1072 -

- 1073 -

$$A_m(r, z1 + dz)$$

- 1074 -

- 1075' -

$$A_m(r, z1 - dz')$$

- 1076 -

- 1077 -

- T -

non      oui      - F -

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3022346 A1

**Littérature non-brevet citée dans la description**

- **G. PARIENTE et al.** Space-time characterization of ultra-intense femtosecond laser beams. *NATURE PHOTONICS,* 25 Juillet 2016, vol. 10, 547-553
- Investigation of amplitude spatio-temporal couplings at the focus of a 100 TW-25 fs laser. **KAHALY S et al.** APPLIED PHYSICS LETTERS. A I P PUBLISHING LLC, US, 03 Février 2014, vol. 104
- **BOWLAN P et al.** Measuring the Complete Spatio-temporal Field of Focused Ultrashort Laser Pulses for Multi-photon Microscopy'', Photonic Materials, Devices, and Applications II. *Proc. of SPIE,* 2007, vol. 6593, 659308
- Phase retrieval algorithms : a comparison. *J. R. Fienup, Applied Optics,* 1982
- **Y. SHECHTMAN et al.** Phase retrieval with application to optical imaging. *IEEE Signal Processing Magazine,* 2015